# EUROPÄISCHE PATENTSCHRIFT

(11) **EP 2 724 382 B1**
(45) Veröffentlichungstag und Bekanntmachung des Hinweises auf die Patenterteilung: **13.01.2016**
(21) Anmeldenummer: 12777845.4
(22) Anmeldetag: 08.06.2012
(51) Int. Cl.: H02S 20/00, F24J 2/52

(54) **STÄNDER FÜR PV-MODULE**
STAND FOR PV MODULES
SUPPORT POUR MODULES PV

(30) Priorität: 08.06.2011 DE 102011104455; 08.06.2011 DE 102011104452
(43) Veröffentlichungstag der Anmeldung: 30.04.2014
(73) Patentinhaber: Schletter GmbH, 83527 Kirchdorf (DE)
(72) Erfinder: MADLINDL, Stefan, 84453 Mühldorf (DE); SCHLETTER, Ludwig, 83527 Haag (DE)
(74) Vertreter: Thum, Bernhard
(86) Internationale Anmeldenummer: PCT/DE2012/000604
(87) Internationale Veröffentlichungsnummer: WO 2012/167774

(56) Entgegenhaltungen:
- CN-U- 201 820 766
- DE-A1-102009 003 151
- DE-A1-102009 054 250
- DE-U1-202007 013 325
- DE-U1-202008 005 020
- DE-U1-202009 016 353
- KR-A- 20070 015 485
- US-A1- 2008 121 273

## Beschreibung

Die Erfindung betrifft einen Ständer für Photovoltaik-Module sowie ein Verfahren zum Montieren eines solchen Ständers.

Photovoltaik-Module oder kurz PV-Module werden auf freiem Gelände üblicherweise mittels Ständer aufgestellt. Das Dokument US2008/121273 A1 wird als nächstliegender Stand der Technik angesehen. Es offenbart einen Ständer für PV-Module mit Pfosten, Balken, Stützstrebe und einem Justierungselement, mittels dem der Balken gegen den Pfosten abgestützt ist, sowie mit einer Justiereinrichtung, in der ein erster horizontaler Gelenkbolzen und ein zweiter horizontaler Gelenkbolzen gelagert sind.

Aus DE 10 2008 018 422 A1 sind derartige Ständer bekannt. Jeder dieser Ständer umfasst einen Pfosten, der vertikal stehend in den Boden eingebracht ist, einen Balken, der über dem Pfosten schräg angeordnet ist, und eine Stützstrebe, mit der der Balken gegen den Pfosten abgestützt ist. Die Ständer sind in einer Reihe auf freiem Gelände angeordnet. Quer auf den Balken dieser Ständer sind mehrere Tragprofile befestigt, die wiederum die PV-Module tragen. Beim Einbringen des Pfostens in den Boden sind Fehlstellungen des Pfostens unausweichlich. Um solche Fehlstellungen zu kompensieren, weist der Ständer diverse Justiermöglichkeiten auf. Ein für den Balken vorgesehener Gelenkbólzen kann entlang einer Referenzlinie zeitlich noch vor dem Zusammenfügen mit dem Balken ortsfest angeordnet und justiert werden. Im Verbindungsbereich zwischen Pfosten und Balken werden hierfür drei spezielle Formteile benötigt, von denen zwei am Aufstellort zu montieren und einzustellen sind, sowie insgesamt neun Schraubverbindungen, von denen am Aufstellort fünf zu setzen und zu spannen sind.

Aus DE 10 2008 005 733 A1 ist eine Tragkonstruktion für Solarmodule bekannt, die einen ähnlichen Ständer mit einem Pfosten und einem Balken umfasst. Im Verbindungsbereich zwischen Pfosten und Balken sind zwei spezielle Formteile vorgesehen, die am Aufstellungsort zu montieren und einzustellen sind, sowie insgesamt vier Schrauben, die sämtlich am Aufstellort zu setzen und zu spannen sind.

Aus DE 10 2009 045 209 A1 ist eine Vorrichtung für eine Ständerkonstruktion bekannt, die einen Pfosten und einem Balken miteinander verbindet. Im Verbindungsbereich sind zwei Formteile und sieben Schrauben vorgesehen.

Aus DE 10 2009 054 250 A1 ist ein Stellsystem für eine aufgeständerte Solaranlage bekannt. Das Stellsystem umfasst ein vertikales Rohr als höhenverstellbare Verlängerung eines Pfostens. Auf dem Rohr ist ein Halteaufsatz schwenkbar angeordnet, der wiederum einen Balken trägt. Im Verbindungsbereich zwischen Pfosten und Balken sind fünf Schrauben vorgesehen, von denen am Aufstellort mindestens zwei zu setzen und zu spannen sind. Das Rohr und der Halteaufsatz sind an dem schrägen Balken bereits vormontiert, sodass das Zusammensetzen mit dem Pfosten und die Höhenverstellung gleichzeitig zu erfolgen haben. Die Höhe der vom Halteaufsatz definierten Schwenkachse kann daher erst im Zeitpunkt der Montage des Balkens festgelegt werden. In der Praxis kann das eine exakte Höheneinstellung entlang einer Richtschnur oder einer Laserlinie erschweren.

Für große Photovoltaik-Anlagen auf freiem Gelände werden sehr viele solcher Ständer gebraucht. Beispielsweise wurden im Jahr 2008 bei dem bekannten deutschen Projekt "Solarpark Lieberose" mit einer Leistung von 53 Megawatt auf einer Gesamtfläche von 1,6 km² rund 50.000 Ständer des eingangs genannten Typs verbaut. Es versteht sich, dass augenscheinlich geringe Veränderungen erhebliche Vorteile hinsichtlich Fertigungsaufwand, Materialeinsatz, Materiallogistik, Montageaufwand, Montagequalität und Montagesicherheit bieten können.

Eine Aufgabe der Erfindung ist es, einen stabilen Ständer für PV-Module zu entwickeln, der im Verbindungsbereich zwischen Pfosten und Balken möglichst wenige Formteile und Schraubverbindungen enthält, ohne dabei auf wesentliche Justiermöglichkeiten zu verzichten. Die Justierung entlang einer vorgegebenen Referenzlinie soll wie bei dem eingangs genannten Ständer noch vor der Montage des Balkens erfolgen können.

Die Aufgabe wird mit dem im Anspruch 1 angegebenen Ständer für PV-Module gelöst. Der Ständer enthält einen Pfosten, der steht und ein oberes Längsende aufweist, einen Balken, der zumindest teilweise über dem Pfosten schräg angeordnet ist, eine Stützstrebe, mittels der der Balken gegen den Pfosten abgestützt ist, sowie eine Justiereinrichtung, in der ein erster horizontaler Gelenkbolzen und ein zweiter horizontaler Gelenkbolzen gelagert sind und die eine Justierstrebe aufweist. Der Pfosten kann insbesondere in einen Boden gegründet oder an einem Fundament angeordnet sein und besteht vorzugsweise aus einem walzgeformten Metallprofil. Der Pfosten kann lotrecht oder beispielsweise senkrecht zu einem geneigten Boden stehend angeordnet sein. Der Balken kann in herkömmlicher Weise eine Längserstreckung aufweisen und ist dazu vorgesehen, mehrere PV-Module oder Tragschienen hierfür zu tragen. Der Balken ist zu diesem Zweck schräg, das heißt längs geneigt angeordnet. Sind Tragschienen auf dem Balken vorgesehen, so verlaufen diese bevorzugt quer zu dem Balken. Die beiden als horizontal bezeichneten Gelenkbolzen können handelsübliche Schrauben mit einem kreiszylindrischen Schaft sein. Der Begriff horizontal ist gleichbedeutend mit querlaufend zum stehenden Pfosten zu verstehen, sodass je nach Schiefstellung des Pfostens die Gelenkbolzen bezüglich der Schwerkraft geringfügig geneigt sein können. Ein Verlauf parallel zu einem geneigten Boden oder andere Schiefstellungen, insbesondere in einem Bereich von bis zu 20 Grad sind denkbar.

Die Justierstrebe ist in dem Pfosten abschnittsweise aufgenommen und ragt aus dem oberen Längsende des Pfostens heraus. Zur Bildung einer Gelenkverbindung ist der erste horizontale Gelenkbolzen nicht nur an der Justiereinrichtung, sondern außerdem an dem Pfosten gelagert. Die Justierstrebe ist zur Kompensation einer möglichen Neigungs-fehlstellung des Pfostens um diesen ersten horizontalen Gelenkbolzen schwenkbar und in einer von mehreren möglichen Schwenkstellungen am Pfosten drehfest arretiert. Außerdem ist vorgesehen, dass der Balken einen offenen Längskanal enthält, der von gegenüberliegenden Seitenwänden begrenzt ist. Zur Bildung einer Gelenkverbindung ist der zweite horizontale Gelenkbolzen nicht nur an der Justiereinrichtung, sondern außerdem an mindestens einer der gegenüberliegenden Seitenwände gelagert, wobei eine gedachte Längsachse des zweiten horizontalen Gelenkbolzens quer durch den offenen Längskanal verläuft. Die Justiereinrichtung greift in den offenen Längskanal ein und ist darin mit dem zweiten horizontalen Gelenkbolzen gelenkig verbunden und außerdem mittels der gegenüberliegenden Seitenwände des Längskanales quer zu dem Balken festgelegt. Es versteht sich, dass die Justiereinrichtung neben einer Justierfunktion auch eine Tragfunktion für den Balken hat.

Wegen des Eingriffs der Justiereinrichtung in den offenen Längskanal können Bauteile eingespart und eine statisch stabile und effiziente Verbindung zwischen der Justiereinrichtung und dem Balken erzeugt werden. Mit der schwenkbaren Justierstrebe kann eine Neigungsfehlstellung des Pfostens kompensiert werden. Eine solche Neigungsfehlstellung tritt in der Praxis häufiger auf und ist in ihrem Ausmaß für gewöhnlich relevanter, als eine Höhenfehlstellung des Pfostens. Im Verbindungsbereich zwischen Balken und Pfosten können neben den zwei Gelenkbolzen noch eine oder zwei weitere Schraubverbindungen vorgesehen sein, insbesondere eine zur drehfesten Arretierung der Justierstrebe und eine für eine optionale Höhenverstellung der Justiereinrichtung. Außerdem ist von Vorteil, dass die Justiervorrichtung entlang einer vorgegebenen Referenzlinie zeitlich noch vor der Montage des Balkens erfolgen kann. Hierfür ist die Justierstrebe separat vom Balken und mit einer die Schiefstellung des Pfostens kompensierenden Neigung am Pfosten anzuordnen. Der Justierbereich kann besonders groß sein, sodass das Errichten eines Pfostens mit weniger Sorgfalt ausführbar ist. Die wenigen Bauteile des Ständers erlauben eine einfache Herstellung, einen hohen Vormontagegrad und ein kleines Transportvolumen sowie außerdem eine einfache Montage entlang einer Referenzlinie.

In einer besonders einfachen Ausführungsform ist es möglich, dass der zweite horizontale Gelenkbolzen direkt an der Justierstrebe gelagert ist, insbesondere in einem oberen Bereich derselben. Vorzugsweise enthält die Justiereinrichtung jedoch einen Halteaufsatz, der an der Justierstrebe angeordnet und in dem der zweite horizontale Gelenkbolzen gelagert ist. Dies kann die Justier- und Tragfunktion der Justiereinrichtung vorteilhaft erweitern. Der Halteaufsatz wird zweckmäßig an einem oberen Bereich der Justierstrebe angeordnet. Besonders bevorzugt ist es, wenn der Halteaufsatz in einer Längsrichtung der Justierstrebe verstellbar angeordnet ist, was praktisch höhenverstellbar bedeutet, da die Justierstrebe in ihrer Mittelstellung idealerweise parallel zum stehenden Pfosten verläuft.

Besonders bevorzugt ist es, wenn am Aufstellort des Ständers eine vormontierte Baugruppe bereitgehalten wird, die aus der Justierstrebe und dem Halteaufsatz besteht, wobei der Halteaufsatz an der Justierstrebe angeordnet und in der Längsrichtung der Strebe verstellbar ist.

In einer bevorzugten Ausführungsform ist möglich, dass zur drehfesten Arretierung der Justierstrebe eine Schraubverbindung vorgesehen ist, welche die Justierstrebe in einem Bogenloch durchdringt und am Pfosten in Lagerstücken lagert, wobei die Lagerstücke in Öffnungen im Pfosten eingesetzt und dort axial zu der Schraubverbindung verschieblich sind und mit der Justierstrebe in Reibkraft- und/oder Formschluss stehen. Der Reibkraft- und/oder Formschluss wirkt vorzugsweise in einem Bereich um das Bogenloch. Die Schraubverbindung kann in einem Bereich zwischen dem zweiten horizontalen Gelenkbolzen und dem oberen Längsende des Pfostens angeordnet sein und verläuft zweckmäßigerweise parallel zu dem zweiten horizontalen Gelenkbolzen.

Der Ständer kann mindestens einen Abstandshalter aufweisen, der die gegenüberliegenden Seitenwände des offenen Längskanales festhält und einer Abstandsveränderung der Seitenwände entgegenwirkt. Dies kann die Stabilität des Balkens erhöhen und außerdem eine Deformation des Balkens bei extremer Belastung vermeiden.

Die Stützstrebe und der Balken können mittels einer Gelenkverbindung mit einem dritten horizontalen Gelenkbolzen verbunden sind. Besonders bevorzugt ist es, wenn der dritte horizontale Gelenkbolzens an mindestens einer der gegenüberliegenden Seitenwände des Längskanales gelagert ist, wobei eine gedachte, Längsachse des dritten horizontalen Gelenkbolzen quer durch den offenen Längskanal verläuft und die Stützstrebe oder ein daran angeordneter zweiter Halteaufsatz zur Lagerung des dritten horizontalen Gelenkbolzens in den offenen Längskanal eingreift und mittels der gegenüberliegenden Seitenwände des Längskanales quer zu dem Balken festgelegt ist. Wie der Halteaufsatz an der Justierstrebe kann der zweite Halteaufsatz an der Stützstrebe in einer Längsrichtung der Stützstrebe verstellbar sein.

In einer bevorzugten Ausführungsform weist der offene Längskanal eine Anschlagfläche auf, an der die Justiereinrichtung anschlagen kann. Zu diesem Zweck kann es vorgesehen sein, dass der Halteaufsatz der Justiereinrichtung eigens eine Blockierfläche aufweist, die rückwärtig eines lateral offenen Lagersitzes für den zweiten horizontalen Gelenkbolzen angeordnet ist und an der Anschlagfläche anschlagen kann.

Besonders bevorzugt ist es, wenn am Aufstellort des Ständers eine vormontierte Baugruppe bereitgehalten wird, die aus dem Balken und der Stützstrebe besteht, wobei der Balken und die Stützstrebe mittels des dritten horizontalen Gelenkbolzens miteinander verbunden sind. Wesentlich ist, dass zum einfachen Transport und/oder Lagern dieser Baugruppe die Stützstrebe und der Balken zusammengeklappt sind. Ist der dritte horizontale Gelenkbolzen an mindestens einer der gegenüberliegenden Seitenwände des offenen Längskanales gelagert, kann die Stützstrebe auf einfache Weise direkt in den offenen Längskanal hineingeklappt sein.

Ein Verfahren zum Errichten des erfindungsgemäßen Ständers mit einer vormontierten Baugruppe aus Balken und Stützstrebe kann folgende Schritte enthalten: 1. Errichten des Pfostens. 2. Anordnung der Justiereinrichtung am Pfosten und Justieren der Justiereinrichtung, insbesondere entlang einer Referenzlinie. 3. Anordnen des Balkens an der Justiereinrichtung und Wegklappen der Stützstrebe vom Balken. 4. Anordnen der Stützstrebe am Pfosten.

Nachfolgend wird die Erfindung anhand eines bevorzugten Ausführungsbeispiels unter Bezugnahme auf Zeichnungen näher erläutert. Es zeigt:
- **Fig. B1**: eine Seitenansicht eines Ständers mit einem Pfosten und einem darüber schräg angeordneten Balken
- **Fig. B2**: eine Seitenansicht des Ständers gemäß **Fig. B1** mit dem Pfosten in einer Schiefstellung
- **Fig. B3**: eine Seitenansicht des Ständers gemäß **Fig. B1** mit dem Pfosten in einer anderen Schiefstellung
- **Fig. B4**: eine Seitenansicht des Ständers gemäß **Fig. B1**, den Balken in verschiedenen Neigungen zeigend
- **Fig. B5**: eine Explosionsansicht einer Justiereinrichtung des Ständers gemäß **Fig. B1**
- **Fig. B6**: eine Perspektive einer Reihenanordnung dreier Ständer gemäß **Fig. B1**

Der in **Fig. B1** in einer Seitenansicht dargestellte Ständer für PV-Module umfasst einen Pfosten **12**, der vertikal stehend in einen Boden **22** eingebracht ist, einen Balken **3,** der über dem Pfosten **12** schräg angeordnet ist, und eine Stützstrebe **23,** mittels der der Balken **3** gegen den Pfosten **12** abgestützt ist. Wie aus dem Stand der Technik allgemein bekannt und aus **Fig. B6** ersichtlich ist, können mehrere solcher Ständer in einer Reihe aufgestellt sein. Quer auf den Balken **3** der Ständer können mehrere Tragschienen **24** angeordnet sein, die wiederum eine Vielzahl von PV-Modulen **25** tragen können. Alternativ können die PV-Module **25** auch direkt auf den Balken **3** montiert sein.

Der Ständer weist eine Justiereinrichtung **32** auf, die in einer Explosionsdarstellung in **Fig. B5** im Detail ersichtlich ist. Mittels, der Justiereinrichtung **32** kann unter anderem eine Neigungsfehlstellung des Pfostens **12** kompensiert werden. Die Neigungsfehlstellung ist gleichbedeutend mit einer Abweichung von einer Sollstellung. Im vorliegenden Ausführungsbeispiel soll der Pfosten **12** wie in **Fig. B1** veranschaulicht exakt vertikal gestellt sein. Zur Orientierung sind eine vertikale Referenz **44** und eine horizontale Referenz **45** gestrichelt gezeichnet. In **Fig. B2** und **Fig. B3** sind zwei extreme, in der Praxis jedoch vorkommende Neigungsfehlstellungen des Pfostens **12** veranschaulicht, die mit der Justiereinrichtung **32** kompensiert sind.

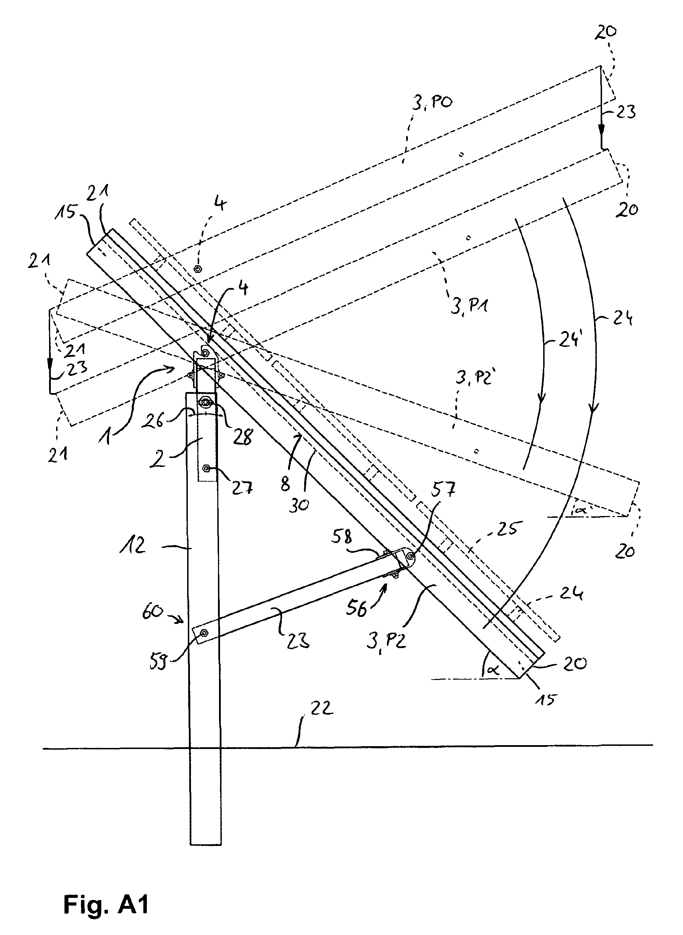

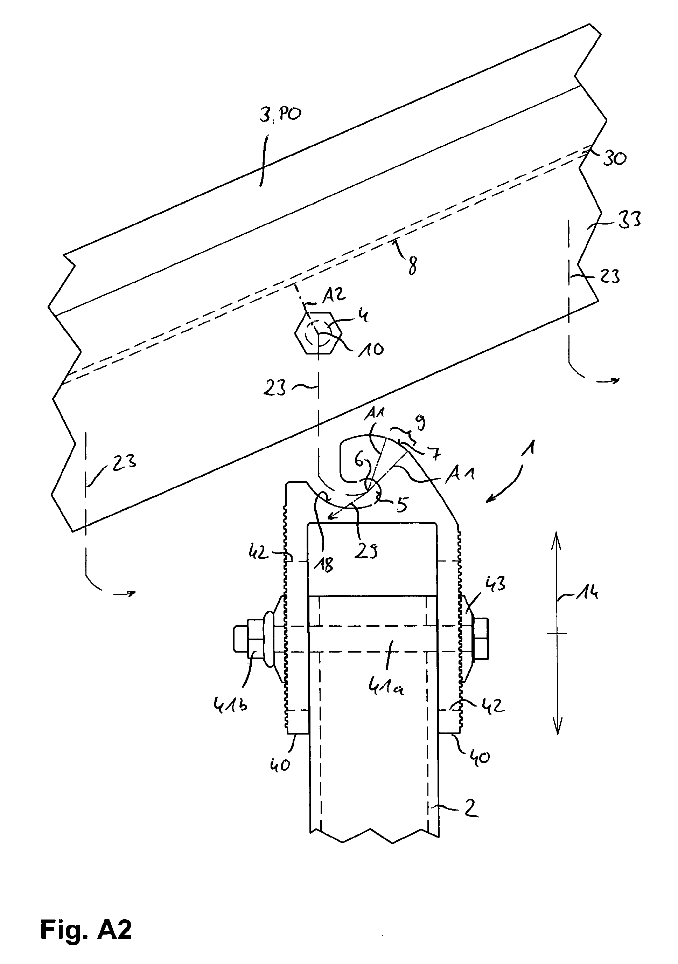

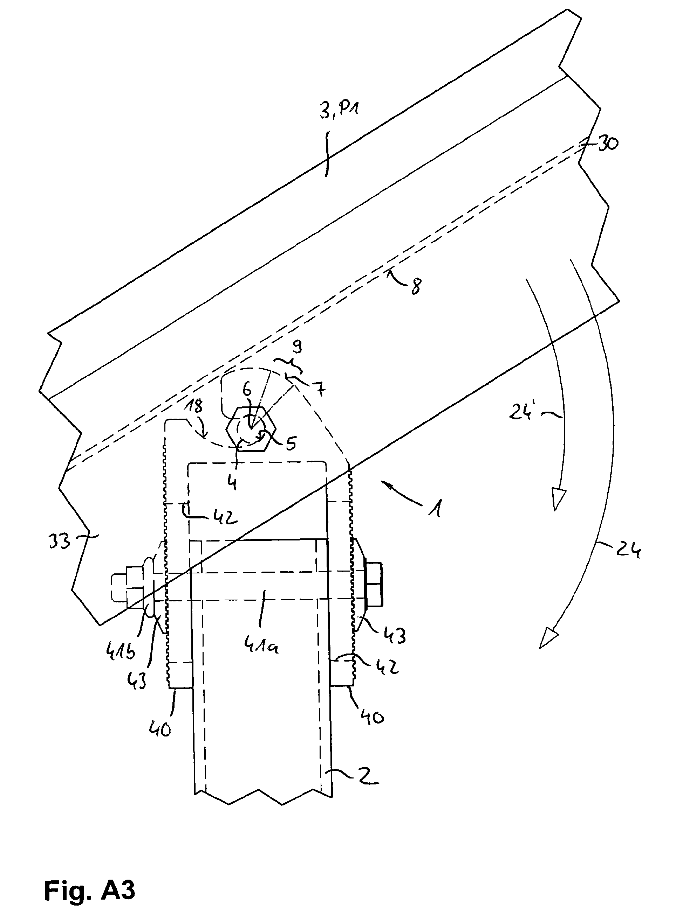

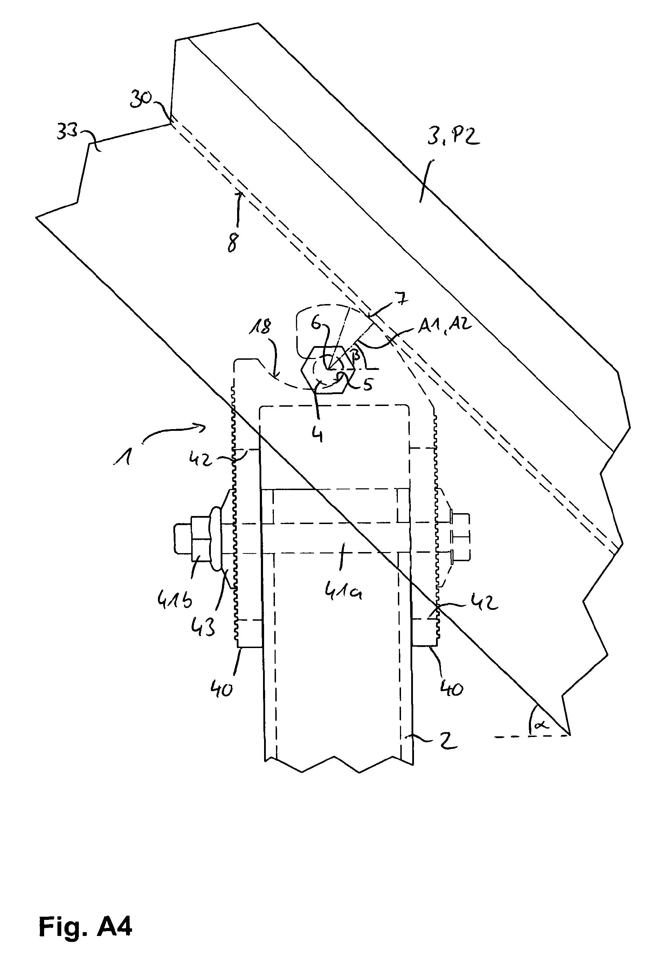

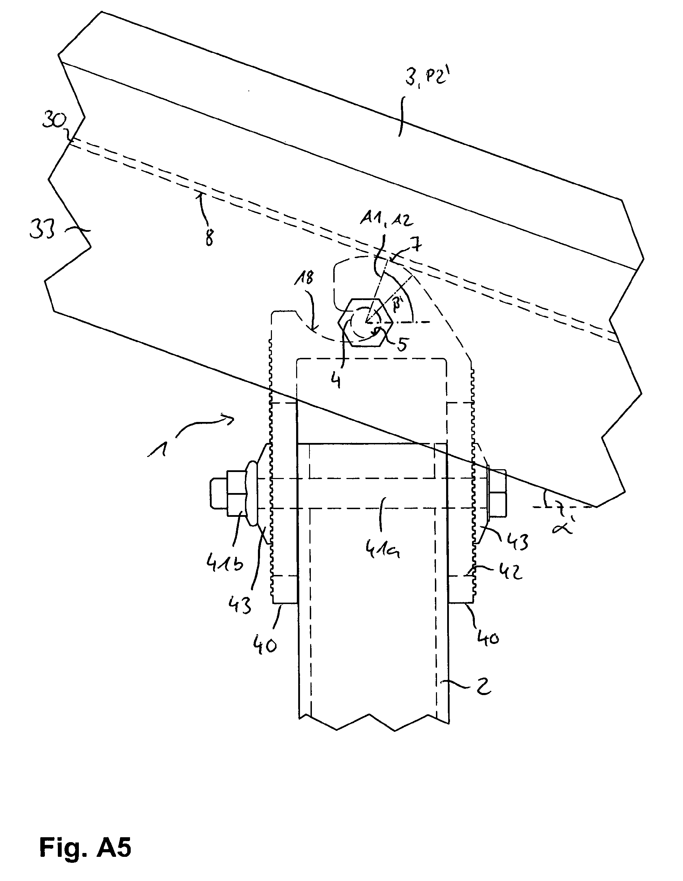

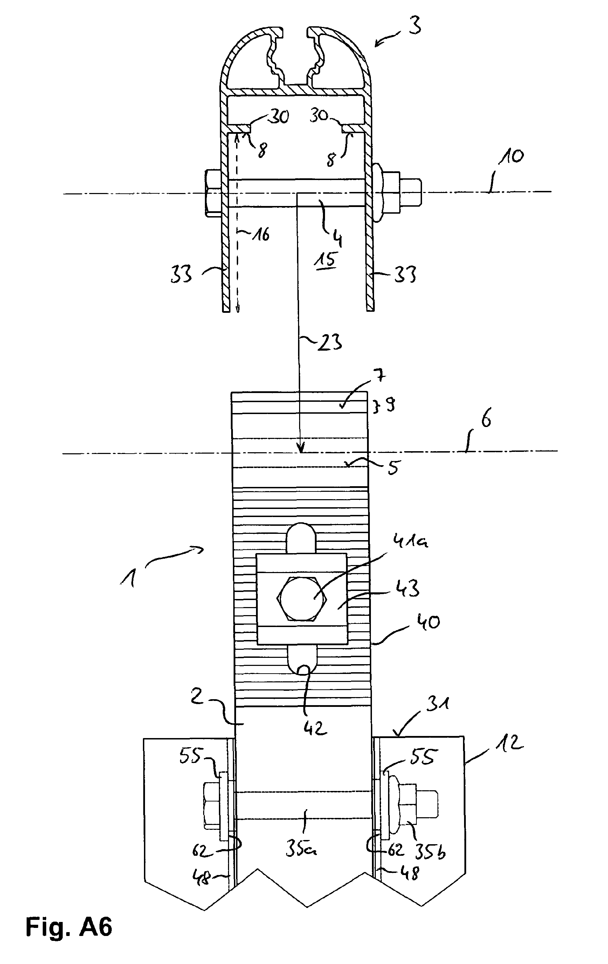

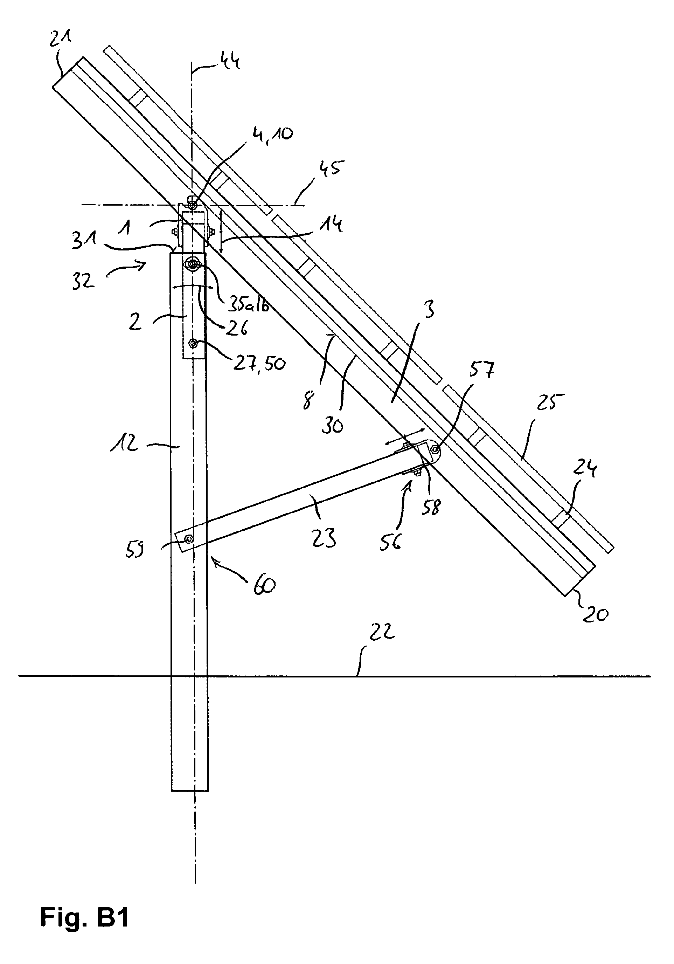

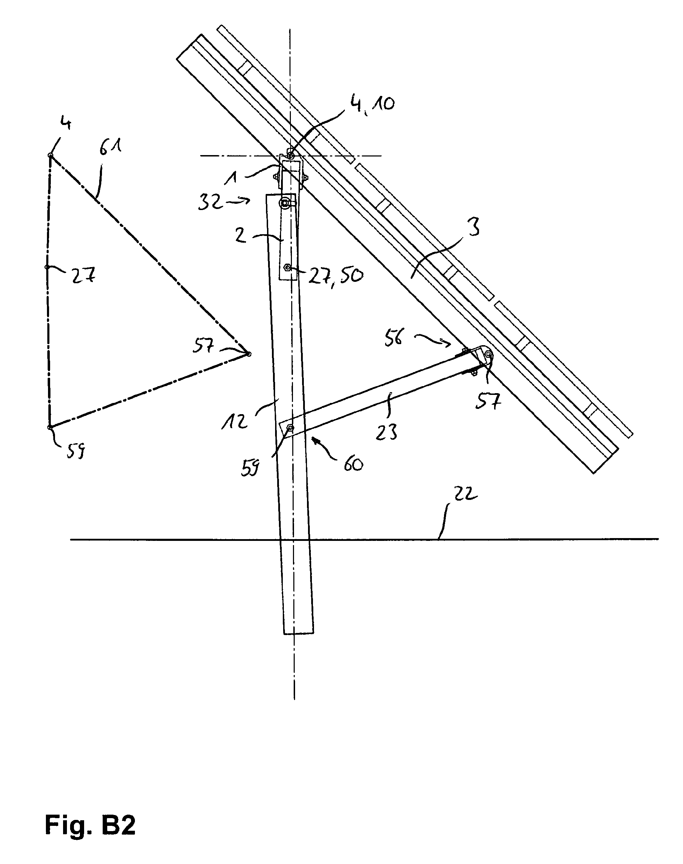

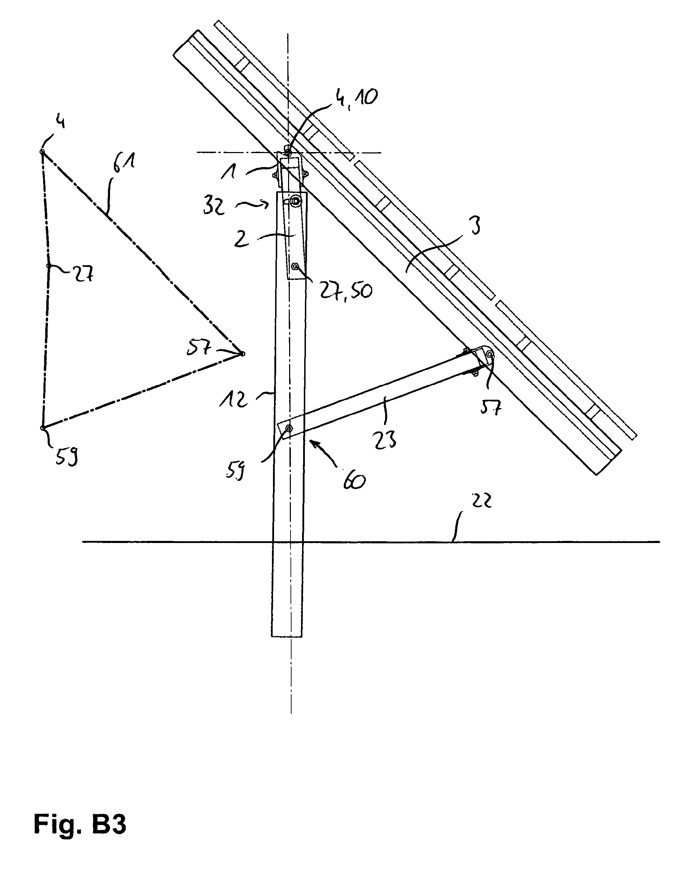

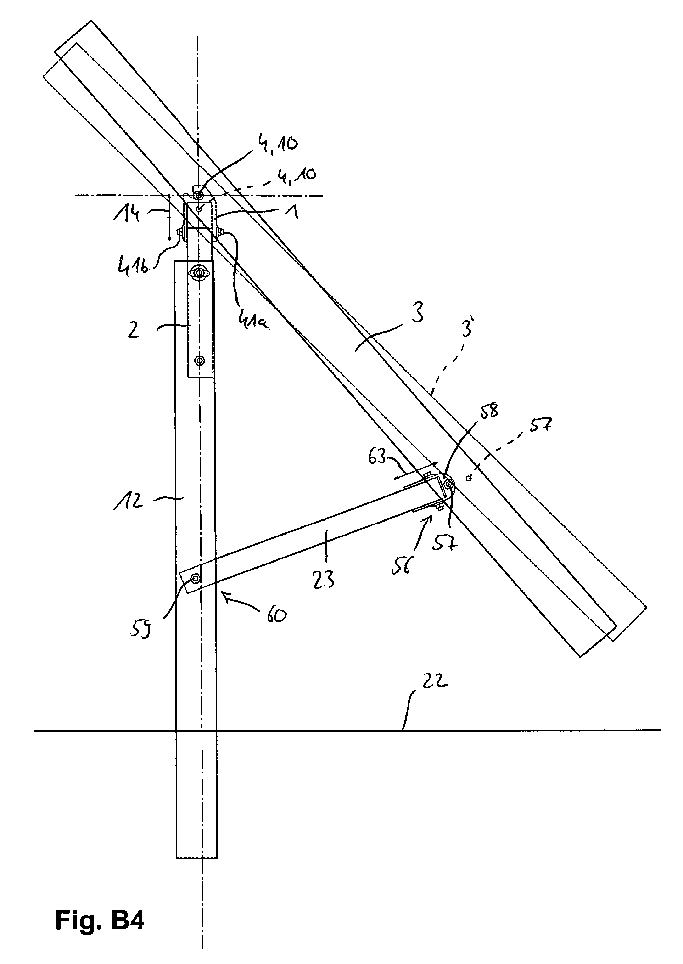

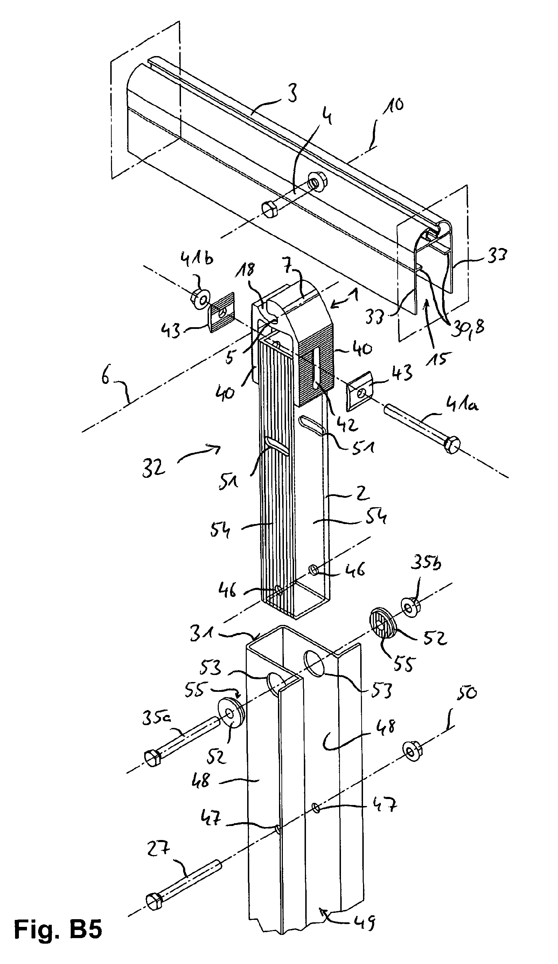

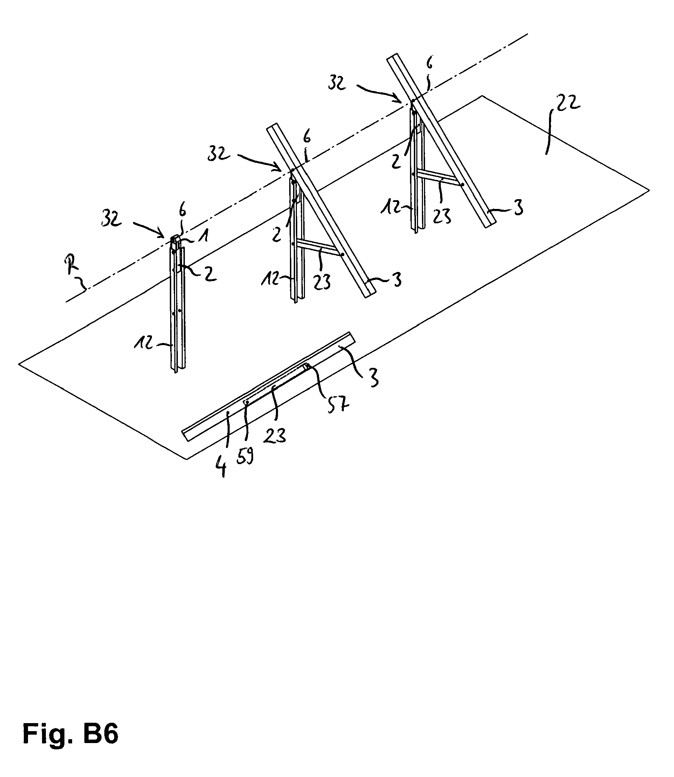

Die Justiereinrichtung **32** enthält eine Justierstrebe **2** und einen Halteaufsatz **1**. Die Justierstrebe **2** ist in dem Pfosten **12,** das heißt genauer in einem u-förmigen Längskanal des Pfostens **12** abschnittsweise aufgenommen. Der etwa u-förmige Längskanal **49** ist von zwei gegenüberliegenden Seitenwänden **48** begrenzt. Die Justierstrebe **2** ragt aus einem oberen Längsende **31** des Pfostens **12** heraus. Die Justierstrebe **2** steht folglich über das obere Längsende **31** des Pfostens **12** über. Wie anhand der Explosionsdarstellung in **Fig. B5** im Detail zu erkennen ist, weist die Justierstrebe **2** einen rechteckigen Hohlquerschnitt auf. An der Justiereinrichtung **32,** das heißt genauer in zwei Öffnungen **46** der Justierstrebe **2** ist ein erster horizontaler, das heißt ein zum Pfosten **12** querlaufender Gelenkbolzen **27** gelagert. Der erste horizontale Gelenkbolzen **27** ist zur Bildung einer Gelenkverbindung außerdem an dem Pfosten **12** gelagert, das heißt genauer in zwei einfachen Rundbohrungen **47** in den gegenüberliegenden Seitenwänden **48.** Die Justierstrebe **2** ist dadurch am Pfosten **12** um eine horizontale Achse **50** gelenkig gelagert. Wesentlich ist, dass die Justierstrebe **2** zur Kompensation einer Neigungsfehlstellung des Pfostens **12** um den ersten horizontalen Gelenkbolzen **27** schwenkbar und in einer von mehreren möglichen Schwenkstellungen am Pfosten **12** drehfest arretiert ist. In **Fig. B1** ist die Justierstrebe **2** in einer Mittelstellung dargestellt und kann in der Zeichnung nach links und nach rechts geschwenkt und festgestellt werden.

Zur drehfesten Arretierung der Justierstrebe **2** ist eine Schraubverbindung **35a/b** vorgesehen. Die Schraubverbindung **35a/b** ist in einem Bereich zwischen dem ersten horizontalen Gelenkbolzen **27** und dem oberen Längsende **31** des Pfostens **12** angeordnet. Die Schraubverbindung **35a/b** durchdringt die Justierstrebe **2** in zwei gegenüberliegenden Bogenlöchern **51** und ist am Pfosten **12** in zwei runden Lagerstücken **52** gelagert. Die runden Lagerstücke **52** sind in zwei runden Öffnungen **53** in den gegenüberliegenden Seitenwänden **48** des Pfostens **12** eingesetzt. Die runden Lagerstücke **52** sind in den runden Öffnungen **53** drehbar und bezüglich der Schraubverbindung **35a/b** einseitig axial verschieblich. Ein Absatz **62** an den runden Lagerstücken **52** verhindert, dass diese von außen durch die runden Öffnungen **53** in den u-förmigen Längskanal **49** des Pfostens **12** fallen können. Außerdem stehen die runden Lagerstücke **52** mit der Justierstrebe **2** in einem Bereich um die Bogenlöcher **51** in Reibkraft- und Formschluss. Hierfür ist an den Seitenwänden der Justierstrebe **2** eine einfache Verzahnung **54** vorgesehen, die in Längsrichtung der Justierstrebe **2** verläuft. Außerdem sind an den runden Lagerstücken **52** korrespondierende Verzahnungen **55** vorgesehen. Die Verzahnungen **54** und **55** greifen ineinander, wobei die runden Lagerstücke **52** in den Öffnungen **53** so gedreht werden, dass deren Verzahnung **55** stets parallel zu den Verzahnungen **54** an der Justierstrebe **2** verläuft.

Wie im Detail aus **Fig. B5** außerdem zu erkennen ist, enthält der Balken **3** einen nach unten offenen Längskanal **15,** der von zwei gegenüberliegenden Seitenwänden **33** begrenzt ist. Der Längskanal **15** ist im Querschnitt im Wesentlichen u-förmig. In dem Längskanal **15** sind außerdem zwei Längsstege **30** enthalten, die an ihren zum Halteaufsatz **1** gerichteten Seiten jeweils eine Anschlagfläche **8** aufweisen.

An einem oberen Bereich der Justierstrebe **2** ist der Halteaufsatz **1** angeordnet, der Bestandteil der Justiereinrichtung **32** ist. In dem Halteaufsatz **1** lagert ein zweiter horizontaler, das heißt zum Pfosten **12** querlaufender Gelenkbolzen **4.** Zur Bildung einer Gelenkverbindung ist der zweite Gelenkbolzen **4** außerdem an den zwei gegenüberliegenden Seitenwänden **33** des Balkens **12** gelagert. Dafür sind in den gegenüberliegenden Seitenwänden **33** zwei nicht näher ersichtliche Durchgangsöffnungen enthalten, in denen der zweite horizontale Gelenkbolzen **4** radial festgelegt ist. Wesentlich ist, dass eine gedachte Längsachse **10** des zweiten horizontalen Gelenkbolzens **4** quer durch den offenen Längskanal **15** verläuft und der Halteaufsatz **1** zur Aufnahme des zweiten horizontalen Gelenkbolzens **4** in den offenen Längskanal **15** des Balkens eingreift und darin mit dem zweiten horizontalen Gelenkbolzen **4** gelenkig verbunden ist. Der Halteaufsatz **1** ist außerdem mittels der gegenüberliegenden Seitenwände **33** des Längskanales **15** quer zu dem Balken **3** festgelegt.

Zur Lagerung des zweiten horizontalen Gelenkbolzens **4** in dem Halteaufsatz **1** enthält der Halteaufsatz **1** einen lateral offenen Lagersitz **5.** Der zweite horizontale Gelenkbolzen **4** kann in den lateral offenen Lagersitz **5** entlang einer Führungsfläche **18** von außerhalb lateral eingeführt werden. Hierfür kann der zweite horizontale Gelenkbolzen **4** bereits vormontiert am Balken **3** gelagert sein. Der Balken **3** kann somit einschließlich des daran bereits festgelegten Gelenkbolzens **4** ausgehend von einer vollständig separaten Position auf den Halteaufsatz **1** verbracht und dabei der Gelenkbolzen **4** in den Lagersitz **5** eingesetzt werden. Mittels eines Verschwenkens des Balkens **3** kann der Gelenkbolzen **4** an einem Entweichen aus dem Lagersitz **5** gehindert werden. Hierfür ist am Halteaufsatz eine Blockierfläche **7** vorgesehen, die in den Stellungen des Balkens **3** gemäß **Fig. B1** bis **Fig. B4** an der Anschlagfläche **8** anschlagen kann.

Der Halteaufsatz **1** kann an der Justierstrebe **2** in unterschiedlichen Positionen längs der Justierstrebe **2** schrittweise festgelegt werden. Dadurch können zusätzlich Höhenfehlstellungen des Pfostens **12** kompensiert werden. Der Halteaufsatz **1** weist zwei einander gegenüberliegende Haltewangen **40** auf, zwischen denen der obere Endbereich der Justierstrebe **2** aufgenommen ist. Es ist eine Schraubverbindung **41a/b** vorgesehen, welche die Justierstrebe **2** quer durchdringt und dort in einfachen Rundbohrungen radial festgelegt ist. Die Schraubverbindung **41a/b** führt außerdem durch zwei Langlöcher **42,** die in den Haltewangen **40** enthalten und in Längsrichtung der Justierstrebe **2** gerichtet sind, sodass die Schraubverbindung **41a/b** darin entsprechend verschieblich ist. Die Schraubverbindung **41a/b** führt außerdem durch zwei eckige Lagerstücke **43,** in welchen die Schraubverbindung **41a/b** in einfachen Rundbohrungen radial festgelegt ist. Die eckigen Lagerstücke **43** sind an den Außenseiten der Haltewangen **40** in einer von mehreren Positionen angeordnet. Hierfür ist an den Innenseiten der Lagerstücke **43** und an den Außenseiten der Haltewangen **40** jeweils eine querlaufende Verzahnung vorgesehen, die miteinander im Zahneingriff stehen. Mit Spannen der Schraubverbindung **41a/b** werden die Lagerstücke gegen die Außenseiten der Haltewangen **40** gehalten. Das Grundprinzip dieser Verstellung ist an sich bekannt und in DE 20 2008 005 020 U1 und DE 20 2009 003 633 U1 der Anmelderin näher beschrieben.

Wie aus **Fig. B1** bis **Fig. B4** weiter ersichtlich ist, ist die Stützstrebe **23** und der Balken **3** mittels einer Gelenkverbindung **56** gelenkig verbunden. Die Gelenkverbindung **56** enthält einen dritten horizontalen Gelenkbolzen **57.** Der dritte horizontale Gelenkbolzen **57** ist wie der zweite horizontale Gelenkbolzen **4** in zwei einfachen Rundbohrungen in den gegenüberliegenden Seitenwänden **33** gelagert, wobei eine gedachte Längsachse des dritten horizontalen Gelenkbolzens **57** ebenfalls quer durch den offenen Längskanal **15** verläuft. An der Stützstrebe **23** ist ein zweiter Halteaufsatz **58** angeordnet, der wie der Halteaufsatz **1** an der Justierstrebe **2** zur Lagerung des dritten horizontalen Gelenkbolzens **57** in den nach unten offenen Längskanal **15** eingreift und mittels der gegenüberliegenden Seitenwände **33** des Längskanales **15** quer zu dem Balken **3** festgelegt ist. Der zweite Halteaufsatz **58** ist in der Längsrichtung der Stützstrebe **23** schrittweise verstellbar analog zu dem Halteaufsatz **1** und der Justierstrebe **2.** Wie **Fig. B4** veranschaulicht kann die Neigung des Balkens **3** bezüglich seiner Stellung **3'** gemäß **Fig. B1** mittels Höhenverstellung **14** des Halteaufsatzes **1** entlang der Justierstrebe **2** und mittels Längenverstellung **63** des zweiten Halteaufsatzes **58** entlang der Stützstrebe **23** verstellt werden. In der gezeigten Stellung des Balkens 3 ist der Halteaufsatz **1** ist maximal nach oben und der zweite Halteaufsatz **58** maximal nach innen gestellt.

An ihrem anderen Ende ist die Stützstrebe **23** mittels einer Gelenkverbindung **60** mit dem Pfosten **12** verbunden. Die Gelenkverbindung **60** enthält einen vierten horizontalen Gelenkbolzen **59.** Die vier horizontalen Gelenkbolzen **27, 4, 57** und **59** sind parallel zueinander, wobei der erste Gelenkbolzen **27** höher liegt als der dritte Gelenkbolzen **57** und der vierte Gelenkbolzen **59** der tiefste und der zweite Gelenkbolzen **4** der höchste ist. Wie **Fig. B2** und **Fig. B3** seitlich links neben dem Ständer schematisch veranschaulichen, schließen die vier horizontalen Gelenkbolzen **27, 4, 57** und **59** ein planes Viereck oder Tetragon **61** ein. Die Neigungsverstellung der Justierstrebe **2** erfolgt in der Ebene des planen Tetragons **61**. Das Tetragon **61** reduziert sich lediglich in dem Fall zu einem Dreieck, wenn der erste Gelenkbolzen **27**, der zweite Gelenkbolzen **4** und der vierte Gelenkbolzen **59** in einer Ebene oder in der Seitenansicht in einer Linie liegen.

Nicht weiter dargestellt ist, dass mehrere Abstandshalter vorgesehen sind, welche die freien Enden der gegenüberliegenden Seitenwände **33** des offenen Längskanales **15** festhalten und dadurch einer Abstandsveränderung der Seitenwände **33** entgegenwirken. Solche Abstandshalter können die Seitenwände **33** uni- oder bidirektional zueinander festlegen, sodass Zug- und/oder Druckkräfte zwischen den Seitenwänden **33** übertragen werden können.

**Fig. B6** zeigt schließlich, wie mehrere solcher Ständer in eine Reihe angeordnet sind. Die Justiereinrichtungen **32** der Ständer kompensieren etwaige Neigungs- und/oder Höhenfehlstellungen der Pfosten **12** und sind idealerweise dergestalt justiert, dass die Schwenkachsen **6** der Lagersitze **5** der Halteaufsätze **1** aller Ständer mit einer Referenzlinie **R** fluchten. Von dem ersten Ständer der Reihe ist momentan lediglich der Pfosten **12** errichtet und die. Justieranordnung **32** daran angeordnet. Die zugehörige Justiereinrichtung **32,** das heißt genauer die Schwenkachse **6** des Lagersitzes **5** des Halteaufsatzes **1** ist entlang der Referenzlinie **R** jedoch bereits ausgerichtet. Der zugehörige Balken **3** ist noch nicht montiert und liegt am Boden **22**. Der am Boden liegende Balken **3** gehört zu einer vormontierten Baugruppe, die aus dem Balken **3** und der Stützstrebe **23** besteht, wobei der Balken **3** und die Stützstrebe **23** mittels des dritten horizontalen Gelenkbolzens **57** bereits miteinander verbunden sind und zum Transport und/oder Lagern der Baugruppe die Stützstrebe **23** zum Balken **3** hin eingeklappt ist. Wesentlich ist außerdem, dass der zweite Gelenkbolzen **4** bereits an dem Balken **3**, das heißt genauer in den gegenüberliegenden Seitenwänden **33** des offenen Längskanals **15** gelagert ist.

Nachfolgend werden zusätzliche Aspekte derselben Erfindung erläutert.

Die Erfindung betrifft auch eine Baugruppe eines Ständers für Photovoltaik-Module sowie ein Verfahren zum Montieren einer solchen Baugruppe.

Photovoltaik-Module oder kurz PV-Module werden auf freiem Gelände üblicherweise mittels Ständer aufgestellt.

Aus DE 10 2008 018 422 A1 sind derartige Ständer bekannt. Jeder dieser Ständer umfasst einen Pfosten, der etwa vertikal in den Boden eingebracht ist, einen Balken, der über dem Pfosten schräg angeordnet ist, und eine Stützstrebe, mit der der Balken gegen den Pfosten abgestützt ist. Die Ständer sind in einer Reihe auf freiem Gelände angeordnet. Quer auf den Balken dieser Ständer sind mehrere Tragprofile befestigt, die wiederum die PV-Module tragen. Am oberen Ende jeden Pfostens ist ein Halteaufsatz angeordnet, mittels dem der jeweilige Balken kippbar gelagert und befestigt ist. Der Halteaufsatz enthält dazu zwei geschlossene vertikale Lagerschlitze, durch die ein Gelenkbolzen geführt ist. Der Gelenkbolzen führt außerdem durch ein Anschlussstück, das am Balken längs verschiebbar angeordnet ist. Zum schnellen und einfachen Zusammenfügen mit dem Halteaufsatz sind in dem Anschlussstück zwei lateral nach unten hin offene Lagerschlitze enthalten. Damit sich bei abhebenden Lasten der Balken einschließlich des Anschlussstücks nicht vom Halteaufsatz lösen kann, ist ein separater Sperrschieber vorgesehen. Der separate Sperrschieber wird in das Anschlussstück direkt unterhalb des Gelenkbolzens eingeschoben und blockiert auf diese Weise ein Abheben des Balkens.

Aus DE 10 2008 005 733 A1 ist eine Tragkonstruktion für Solarmodule bekannt, die ebenfalls einen Ständer mit einem vertikalen Pfosten, einem schrägen Balken und einer Stützstrebe umfasst. Auf dem vertikalen Pfosten ist ein Halteaufsatz mit einer geneigten Lagerfläche befestigt, auf welcher der schräge Balken plan aufliegt. Der schräge Balken wird an der Lagerfläche des Halteaufsatzes mittels zweier separater und vor Ort zu setzender Schrauben gegen Verrutschen und Abheben befestigt. DE 10 2009 045 209 A1 zeigt einen Ständer für PV-Module mit einem ähnlichen Halteaufsatz. Auch hier sind zur Befestigung des Balkens am Halteaufsatz vor Ort mindestens zwei separate Schrauben zu setzen.

Aus DE 10 2009 054 250 A1 ist ein Stellsystem für eine aufgeständerte Solaranlage bekannt. Das Stellsystem umfasst ein vertikales Rohr als höhenverstellbare Verlängerung eines vertikalen Pfostens. Auf dem Rohr ist ein Halteaufsatz schwenkbar angeordnet, der wiederum einen schrägen Balken trägt. Das Rohr und der Halteaufsatz sind anders als bei den zuvor genannten Systemen an dem schrägen Balken bereits vormontiert, sodass das Zusammensetzen mit dem Pfosten und die Höhenverstellung gleichzeitig zu erfolgen hat und hierfür sowohl mit dem Balken als auch mit dem daran schwenkbar angeordneten Rohr gleichzeitig zu hantieren ist. In der Praxis kann das eine exakte Höheneinstellung entlang einer Richtschnur oder einer Laserlinie erschweren.

Für große Photovoltaik-Anlagen auf freiem Gelände werden sehr viele solcher Ständer gebraucht. Beispielsweise wurden im Jahr 2008 bei dem bekannten deutschen Projekt Solarpark Lieberose" mit einer Leistung von 53 Megawatt auf einer Gesamtfläche von 1,6 km² rund 50.000 Ständer des eingangs genannten Typs verbaut. Es versteht sich, dass augenscheinlich geringe Veränderungen erhebliche Vorteile hinsichtlich Fertigungsaufwand, Materialeinsatz, Materiallogistik, Montageaufwand, Montagequalität und Montagesicherheit bieten können.

Eine Aufgabe der Erfindung ist es, einen Ständer der eingangs genannten Art zu entwickeln, dessen Balken von nur einer Person schneller und ergonomischer als bisher an dem Halteaufsatz des Ständers montierbar ist. Der Balken soll daher am Aufstellort möglichst werkzeugfrei und ohne separat vorzuhaltende Hilfsmittel an dem Halteaufsatz befestigt werden können.

Die Aufgabe wird mit der Baugruppe eines Ständers für PV-Module gemäß Anspruch 1 gelöst. Diese enthält einen Halteaufsatz, der auf einem Bauteil des Ständers angeordnet ist, einen Balken, der mittels des Halteaufsatzes an dem Bauteil angeordnet werden kann, sowie einen an dem Balken festgelegten Gelenkbolzen. Das Bauteil des Ständers kann ein Pfosten sein, der zum Abtragen von Lasten vorzugsweise stehend in einem Boden angeordnet sein kann. Das Bauteil kann auch eines sein, das dazu vorgesehen ist, auf einem solchen Pfosten angeordnet zu werden, insbesondere an einem oberen Ende davon. Der Balken kann in herkömmlicher Weise eine Längserstreckung aufweisen und ist dazu vorzugesehen, mehrere PV-Module oder Tragschienen hierfür zu tragen. Der Balken kann zu diesem Zweck schräg, das heißt längs geneigt über dem Pfosten angeordnet sein. Sind Tragschienen auf dem Balken vorgesehen, so verlaufen diese bevorzugt quer zu dem Balken. Der Gelenkbolzen kann eine handelsübliche Schraube mit einem kreiszylindrischen Schaft sein. Zur Festlegung oder Lagerung des Gelenkbolzens kann der Gelenkbolzen durch Öffnungen im Balken führen. Bevorzugt werden Rundbohrungen, in denen der Gelenkbolzen auf einfache Weise radial festgelegt ist. Es versteht sich, dass der Gelenkbolzen quer zu der Längserstreckung des Balkens gerichtet ist und den Balken quer vollständig durchdringen kann. Eine nur teilweise Durchdringung und das Vorsehen von zwei axial fluchtenden Gelenkbolzen ist ebenso denkbar. Im Endmontagezustand des Ständers kann der Gelenkbolzen etwa horizontal verlaufen.

Der Halteaufsatz enthält einen lateral offenen Lagersitz, in dem der am Balken festgelegte Gelenkbolzen ausgehend von einer vom Halteaufsatz separaten Position lateral einsetzbar ist und dem eine Schwenkachse zugeordnet ist. In einer ersten Schwenkposition des Balkens und in einer um die Schwenkachse gedrehten zweiten Schwenkposition des Balkens ist der am Balken festgelegte Gelenkbolzen in dem lateral offenen Lagersitz eingesetzt. Der Halteaufsatz weist eine Blockierfläche auf, und der Balken weist eine Anschlagfläche auf. Wesentlich ist, dass die Anschlagfläche an der Blockierfläche anschlagen kann. Die Blockierfläche ist in einem Bereich rückwärtig des lateral offenen Lagersitzes angeordnet, sodass in der ersten Schwenkposition der an dem Balken festgelegte Gelenkbolzen aus dem lateral offenen Lagersitz lateral entweichen kann und in der zweiten Schwenkposition des Balkens ein laterales Entweichen des am Balken festgelegten Bolzens aus dem lateral offenen Lagersitz mittels einem Anschlagen der Anschlagfläche an der Blockierfläche blockiert ist.

Der Balken mit dem darin festgelegten Gelenkbolzen kann ohne separat vorzuhaltende Hilfsmittel von nur einer Person durch bloßes Einsetzen des Gelenkbolzens in den lateral offenen Lagersitz und einem anschließenden Schwenken fertig an dem Halteaufsatz befestigt werden. Einem Festziehen einer Schraubverbindung oder einem Anbringen eines Sicherungsmittels bedarf es nicht. Bei einer zigtausend-fachen Montage eines solchen Balkens, wie es bei großen PV-Anlagen der Fall ist, ergeben sich erhebliche Vorteile hinsichtlich Montageaufwand, Montagequalität und Montagesicherheit.

Es versteht sich, dass in der zweiten Schwenkpositionen die Blockierfläche zwischen dem Lagersitz und der Anschlagfläche angeordnet ist und in der ersten Schwenkstellung zwischen der Anschlagfläche und der Lagerstelle keine Blockierfläche vorgesehen ist oder aber endet oder zumindest ihre Eigenschaft verliert, mit der Anschlagfläche in Kontakt gelangen zu können. Die Blockierfläche kann um die Schwenkachse konvex gekrümmt sein. So kann der Balken nicht nur in einer, sondern in mehreren zweiten Schwenkpositionen mit unterschiedlichen Neigungen endangeordnet sein und die Blockierfläche dennoch an der Anschlagfläche anschlagen. Die Krümmung der Blockierfläche ist vorzugsweise kreisförmig oder kreiszylindrisch, wobei der Mittelpunkt oder die Mittelachse nicht notwendigerweise mit der Schwenkachse des Lagersitzes zusammenfallen muss. Abschnittsweise kreisförmige oder kreiszylinderförmige Flächen sind ebenso denkbar. Die Blockierfläche kann in einer anderen Erstreckungsrichtung parallel zu der Schwenkachse sein. Weiter von Vorteil ist, wenn ein Abstand der Blockierfläche zu der Schwenkachse und ein Abstand der Anschlagfläche zu einer zentralen Längsachse des an dem Balken festgelegten Bolzens mit einer geeigneten Toleranz gleich sind. Die Toleranz soll kleiner sein als der Radius des Gelenkbolzens. Bevorzugt werden Toleranzen von 1 mm und weniger. Die Anschlagfläche ist im Gegensatz zur Blockierfläche vorzugsweise plan und/oder parallel zu einer Längsrichtung des Balkens verlaufend. Wie die Blockierfläche kann die Anschlagfläche in einer weiteren Erstreckungsrichtung außerdem parallel zu einer Längsachse des Bolzens sein. Die Anschlagfläche kann entlang des Balkens durchlaufend sein oder dort nur abschnittsweise vorgesehen sein, insbesondere im Bereich des am Balken festgelegten Gelenkbolzens. Denkbar ist auch, die Anschlagfläche mittels eines separaten Bauteils an dem Balken vorzusehen. Vorzugsweise wird die Anschlagfläche jedoch mit Balken mitgefertigt, insbesondere in einem Strangpressverfahren.

Das Bauteil, auf dem der Halteaufsatz angeordnet ist, kann ein stehender Pfosten des Ständers sein. In einer vorteilhaften Ausführungsform ist das Bauteil eine Justierstrebe, die bestimmt und geeignet ist, an einem Pfosten des Ständers justierbar, insbesondere neigungsverstellbar angeordnet zu werden. Damit können Schiefstellungen oder Neigungsfehlstellung des Pfostens kompensiert werden. Ergänzend oder alternativ kann der Halteaufsatz in Längsrichtung der Justierstrebe verstellbar sein, insbesondere schrittweise. Die Justierstrebe kann aus einem oberen Längsende des Pfostens ragen und nach oben gerichtet sein, sodass eine Längenverstellung entlang der Justierstrebe im Wesentlichen eine Höhenverstellung bedeutet.

Es versteht sich, dass der Balken und der Halteaufsatz bezüglich der Schwenkachse axial zueinander festgelegt sein können. In einer vorteilhaften Ausführungsform ist vorgesehen, dass der Balken einen offenen Längskanal enthält und der Halteaufsatz in den offenen Längskanal eingreift und die Anschlagfläche in dem offenen Längskanal angeordnet ist. Der offene Längskanal kann im Wesentlichen u-förmig und als vergleichsweise breite und tiefe Nut ausgeführt sein und außerdem längs des Balkens durchgehend sein. Der offene Längskanal kann seitlich von zwei gegenüberliegenden Seitenwänden begrenzt sein, zwischen denen der Halteaufsatz quer zum Balken beidseitig festgelegt ist. Die Anschlagfläche kann optional die Eingriffstiefe des offenen Längskanales für den Halteaufsatz begrenzen.

In einer alternativen Ausführungsform ist es möglich, dass der Halteaufsatz zwei Wangen aufweist, zwischen denen der Balken angeordnet sein kann. Die Anschlagfläche kann hierbei außen am Balken und die Blockierfläche an den Wangen vorgesehen sein.

Der lateral offene Lagersitz kann die Innenfläche eines Segments eines hohlen Kreiszylinders beschreiben, wobei das Segment einen Öffnungswinkel im Bereich zwischen 90 und 220 Grad aufweist. Segmente eines hohlen Kreiszylinders eignen sich besonders als Lagersitz für handelsübliche Gelenkbolzen. Werte für den Öffnungswinkel von 180 ± 30 Grad werden bevorzugt. Der Öffnungswinkel des Segments kann größer sein als 180 Grad, da zwischen Gelenkbolzen und Lagersitz ein zweckmäßiges Lagerspiel besteht und eine möglichst kleine laterale Öffnung des Lagersitzes statische Vorteile hat. Aus vergleichbaren Gründen wird es bevorzugt, wenn eine Startrichtung, mit der der an dem Balken festgelegte Gelenkbolzen aus dem lateral offenen Lagersitz entweichen kann, mit einer Neigung in einem Bereich zwischen 5 und 50 Grad schräg nach unten gerichtet ist.

In einer vorteilhaften Ausführungsform weist der Halteaufsatz eine lateral zugängliche Führungsfläche auf, die den an dem Balken festgelegten Gelenkbolzen ausgehende von der vom Halteaufsatz separaten Position lateral empfangen kann. Die lateral zugängliche Führungsfläche endet an dem lateral offenen Lagersitz und kann den am Balken festgelegten Gelenkbolzen lateral zu dem lateral offenen Lagersitz führen. Die lateral zugängliche Führungsfläche kann die Montage des Balkens am Halteaufsatz, das heißt genauer das laterale Einsetzen des am Balken festgelegten Gelenkbolzens in den lateral offenen Lagersitz erleichtern. Besonders ergonomisch ist es, wenn die lateral zugängliche Führungsfläche zumindest abschnittsweise konkav gekrümmt ist. Möglich sind aber auch plane und unstetige Führungsflächen.

Die erste Schwenkposition des Balkens kann eine waagrechte Stellung des Balkens sein oder eine Stellung, bei der ein zu dem am Balken festgelegten Gelenkbolzen entfernteres Längsende des Balkens höher liegt als ein anderes Längsende des Balkens. Die zweite Schwenkposition des Balkens kann eine Stellung sein, bei der ein zu dem an dem Balken festgelegten Gelenkbolzen entfernteres Längsende tiefer liegt als das andere Längsende des Balkens. Derartige Schwenkstellungen machen die Montage eingängig und sicher und können die Lagerung des Gelenkbolzens im lateral offenen Lagersitz besonders stabil machen.

Es versteht sich, dass dem Halteaufsatz und dem Balken innerhalb der Baugruppe eine wesentliche Bedeutung zukommt.

Ein Verfahren zum Montieren der erfindungsgemäßen Baugruppe kann folgende Schritte enthalten: 1. Verbringen des Balkens zusammen mit dem am Balken festgelegten Bolzen aus der vom Halteaufsatz separaten Position in die erste Schwenkposition, wobei der an dem Balken festgelegte Bolzen lateral in den lateral offenen Lagersitz eingesetzt wird. 2. Schwenken des Balkens um die Schwenkachse in die zweite Schwenkstellung, wobei die Blockierfläche und die Anschlagfläche einander gegenüber gestellt werden, sodass ein laterales Entweichen des am Balken festgelegten Gelenkbolzens blockiert ist. Während des Schwenkens des Balkens in die zweite Schwenkstellung kann ein zu dem an dem Balken festgelegten Gelenkbolzen entfernteres Längsende tiefer gelangen. Während des Verbringens des Balkens in die erste Schwenkstellung kann der am Balken festgelegte Gelenkbolzen auf der lateral zugänglichen Führungsfläche lateral zu dem lateral offenen Lagersitz geführt werden.

Nachfolgend wird die Erfindung anhand eines bevorzugten Ausführungsbeispiels unter Bezugnahme auf Zeichnungen näher erläutert. Es zeigt:
- **Fig. A1**: eine Seitenansicht eines Ständers mit einem Balken, der mittels eines Halteaufsatzes an einer Justierstrebe des Ständers angeordnet und in drei weiteren Positionen gezeigt ist
- **Fig. A2**: eine Detailseitenansicht des Ständers gemäß **Fig. A1** im Bereich des Halteaufsatzes und den Balken in einer vom Halteaufsatz separaten Position zeigend
- **Fig. A3**: eine Detailansicht wie **Fig. A2**, jedoch den Balken in einer ersten Schwenkposition zeigend
- **Fig. A4**: eine Detailansicht wie **Fig. A2**, jedoch den Balken in einer zweiten Schwenkposition zeigend
- **Fig. A5**: eine Detailansicht wie **Fig. A2**, jedoch den Balken in einer anderen zweiten Schwenkposition zeigend
- **Fig. A6**: eine Vorderansicht des Halteaufsatzes und einen Querschnitt des Balkens gemäß **Fig. A1** in einer waagrechten Position

Der in **Fig. A1** in einer Seitenansicht dargestellte Ständer für PV-Module umfasst einen Pfosten **12**, der etwa vertikal stehend in einen Boden **22** eingebracht ist, einen Balken **3**, der über dem Pfosten **12** schräg angeordnet ist, und eine Stützstrebe **23**, mittels der der Balken **3** gegen den Pfosten **12** abgestützt ist. Wie aus dem Stand der Technik allgemein bekannt, können mehrere solcher Ständer in einer Reihe aufgestellt sein. Quer auf den Balken 3 der Ständer können mehrere Tragschienen **24** angeordnet sein, die wiederum eine Vielzahl von PV-Modulen **25** tragen können. Alternativ können die PV-Module **25** auch direkt auf den Balken **3** montiert sein.

Der Balken **3** ist in **Fig. A1** gemäß den durchgezogenen Linien in einer zweiten Schwenkposition **P2** sowie in drei weiteren alternativen Positionen gestrichelt dargestellt: Eine separate Position **P0**, eine erste Schwenkposition **P1** sowie eine alternative zweite Schwenkposition **P2**'. Es versteht sich, dass für die alternative zweite Schwenkposition **P2**' eine zur Stützstrebe **23** alternative, nicht näher dargestellte längere Stützstrebe erforderlich ist.

An einem oberen Bereich des Pfostens **12** ist eine Justierstrebe **2** neigungsverstellbar angeordnet. Die Justierstrebe **2** ist um einen horizontalen Gelenkbolzen **27** schwenkbar und kann mittels einer Schraubverbindung **28** in mehreren verschiedenen Stellungen am Pfosten **12** drehfest arretiert werden. Die Neigungsverstellbarkeit der Justierstrebe **2** ist mittels des Doppelpfeils **26** symbolisch dargestellt und ist zur Kompensation einer möglichen Schiefstellung des Pfostens **12** vorgesehen. Die Justierstrebe **2** ist in der gezeigten Stellung etwa parallel zu dem Posten **12** gestellt.

An einem oberen Bereich der Justierstrebe **2** ist ein Halteaufsatz **1** höhenverstellbar angeordnet. Dazu kann der Halteaufsatz **1** an der Justierstrebe **2** in unterschiedlichen Positionen längs der Justierstrebe **2** schrittweise festgelegt werden. Wie **Fig. A2** bis **Fig. A6** im Detail zeigen, weist der Halteaufsatz **1** zwei einander gegenüberliegende Haltewangen **40** auf, zwischen denen der obere Endbereich der Justierstrebe **2** aufgenommen ist. Außerdem ist eine Schraubverbindung **41a/b** vorgesehen, welche die Justierstrebe **2** quer durchdringt und dort in einfachen Rundbohrungen radial festgelegt ist. Die Schraubverbindung **41a/b** führt außerdem durch zwei Langlöcher **42,** die in den Haltewangen **40** enthalten und in Längsrichtung **14** der Justierstrebe **2** gerichtet sind; sodass die Schraubverbindung **41a/b** darin entsprechend verschieblich ist. Die Schraubverbindung **41a/b** führt außerdem durch zwei Lagerstücken **43**, in welchen die Schraubverbindung **41a/b** in einfachen Rundbohrungen radial festgelegt ist. Die Lagerstücke **43** sind an den Außenseiten der Haltewangen **40** in einer von mehreren Positionen angeordnet. Hierfür ist an den Innenseiten der Lagerstücke **43** und an den Außenseiten der Haltewangen **40** jeweils eine querlaufende Verzahnung vorgesehen, die miteinander im Zahneingriff stehen. Mit Spannen der Schraubverbindung **41a/b** werden die Lagerstücke **43** gegen die Außenseiten der Haltewangen **40** gehalten. Das Grundprinzip dieser Verstellung ist an sich bekannt und in DE 20 2008 005 020 U1 und DE 20 2009 003 633 U1 der Anmelderin näher beschrieben.

Mittels des Halteaufsatzes **1** ist der Balken **3** an der Justierstrebe **2** befestigt. Die Justierstrebe **2**, der Halteaufsatz **1** und der Balken **3** gehören zu einer erfindungsgemäßen Baugruppe. Die Baugruppe enthält außerdem einen an dem Balken **3** festgelegten oder mit anderen Worten gelagerten Gelenkbolzen **4**. Der Gelenkbolzen **4** ist vormontiert an dem Balken **3** vorgesehen. Der Gelenkbolzen **4** kann an einem Errichtungsort des Ständers vormontiert werden. Vorzugsweise erfolgt dies jedoch werkseitig, das heißt insbesondere am Herstellungsort des Balkens **3**. Nach einem Zusammensetzen des Balkens **3** mit dem Halteaufsatz **1** befindet sich der Gelenkbolzen **4** etwa in einer horizontalen Lage.

Wie in **Fig. A2** im Detail zu erkennen ist, enthält der Halteaufsatz **1** einen lateral offenen Lagersitz **5**. Der Lagersitz **5** ist in der Zeichnung etwa nach links seitlich offen. Dem für den Gelenkbolzen **4** bestimmten und geeigneten Lagersitz **5** ist eine Schwenkachse **6** zugeordnet, die zentral zum oder im Lagersitz **5** verläuft. Ist der Gelenkbolzen **4** in den Lagersitz **5** eingesetzt, sind die Schwenkachse **6** und eine zentrale Längsachse **10** des Gelenkbolzens **4** mit einer geeigneten Toleranz von hier weniger als 1 mm achsgleich. Der Lagersitz **5** beschreibt die Innenfläche eines Segments eines hohlen Kreiszylinders, wobei das Segment bezüglich der Schwenkachse **6** einen Öffnungswinkel von etwa 200 Grad aufweist. Die lateralen Enden des Lagersitzes sind durch kurze Unterbrechungen in den Linien symbolisiert. Statisch vorteilhaft ist zudem, dass eine Startrichtung **29,** mit welcher der Gelenkbolzen **4** in der ersten Schwenkposition **P1** des Balkens **3** lateral aus dem Lagersitz **5** entweichen kann, nicht waagrecht, sondern mit einem Winkel schräg nach unten gerichtet ist. Der Winkel beträgt in diesem Ausführungsbeispiel etwa 35 Grad bezüglich der Waagrechten.

In **Fig. A2** ist der Balken **3** in der separaten Position **P0** dargestellt. Die separate Position **P0** ist eine anfängliche Montagestellung, bei welcher der Balken **3** und der darin festgelegte Gelenkbolzen **4** vollständig vom Halteaufsatz **1** getrennt sind. Insbesondere sind der Halteaufsatz **1** und der Balken **3** in der separaten Position **P0** frei von einem gegenseitigen Eingriff oder Ineinanderragen und frei von einem gegenseitigen Kontakt.

Der Lagersitz **5** ist dergestalt lateral offen und von außen zugänglich, dass der in dem Balken **3** festgelegte Gelenkbolzen **4** ausgehend von der separaten Position **P0** des Balkens **3** lateral in den Lagersitz **5** einsetzbar ist. Das bedeutet, dass der Gelenkbolzen **4** quer zu seiner Längsachse **10 und** obwohl der Gelenkbolzen **4** bereits an dem Balken **3** festgelegt ist, in den Lagersitz **5** eingesetzt werden kann.

Der Balken **3** weist eine Strangform auf und ist als Strangpressprofil ausgeführt. Der Balken **3** hat abgesehen von nachträglichen Bearbeitungsschritten über seine gesamte Länge einen einheitlichen Querschnitt, der aus **Fig. A6** ersichtlich ist. Dort ist zu erkennen, dass der Querschnitt des Balkens **3** größtenteils offen ist und einen offenen Längskanal **15** enthält, der von zwei sich gegenüberliegenden Seitenwänden **33** begrenzt ist. Der offene Längskanal **15** ist in Art einer großen Längsnut in dem Balken **3** durchgehend vorgesehen. Wesentlich ist, dass beim Einsetzen des Gelenkbolzens **4** in den Lagersitz **5** dieser Längskanal **15** des Balkens **3** den Halteaufsatz **1** aufnimmt. Mit anderen Worten greift bei diesem Vorgang der Halteaufsatz **1** in den Längskanal **15** ein.

In der ersten Schwenkposition **P1** des Balkens **3** ist der am Balken **3** festgelegte Gelenkbolzen **4** in dem lateral offenen Lagersitz **5** eingesetzt, wie im Detail in **Fig. A3** zu erkennen ist. Charakteristisch für die erste Schwenkposition **P1** ist in diesem Ausführungsbeispiel, dass ein zu dem Gelenkbolzen **4** entfernteres Längsende **20** des Balkens **3** höher bezüglich der Schwerkraft liegt als das gegenüberliegende andere Längsende **21**.

Der Balken **3** kann ausgehend von der ersten Schwenkposition **P1** um die Schwenkachse **6** in die zweite Schwenkposition **P2** gedreht werden, die der in **Fig. A1** gezeigten Endmontagestellung entspricht. Charakteristisch für die zweite Schwenkposition **P2** ist, dass das zu dem Gelenkbolzen **4** entferntere Längsende **20** des Balkens **3** tiefer liegt als dessen anderes Längsende **21**. Der Balken **3** ist in der zweiten Schwenkposition **P2** mit einem Winkel a von etwa 45 Grad gegenüber der Waagrechten geneigt.

Aus **Fig. A4** ist zu erkennen, dass der Gelenkbolzen **4** in dieser bezüglich der ersten Schwenkposition **P1** gedrehten zweiten Schwenkposition **P2** des Balkens **3** ebenfalls in den lateral zugänglichen Lagersitz **5** eingesetzt ist. Um das Einsetzen zu erleichtern, weist der Halteaufsatz **1** eine lateral zugängliche Führungsfläche **18** auf, die den an dem Balken **3** festgelegten Gelenkbolzen **4** aus der vom Halteaufsatz **1** separaten Position **P1** lateral von außen empfangen kann. Die lateral zugängliche Führungsfläche endet direkt an dem Lagersitz **5.** Wesentlich ist, dass die lateral zugängliche Führungsfläche **18** den am Balken **3** festgelegten Gelenkbolzen **4** lateral zu dem Lagersitz **5** führen kann. Die Führungsfläche **18** ist konkav gekrümmt. An einem in der Zeichnung rechts liegenden Anfangsbereich der Führungsfläche **18** führt diese zunächst nach unten, sodass der Gelenkbolzen **4** in ergonomischer Weise schwerkraftbedingt nach unten streben kann. Die Führungsfläche **18** führt dann an einer Tiefstelle vorbei, wo der Gelenkbolzen **4** zusammen mit dem Balken **3** gegebenenfalls in einer Zwischenposition sicher verharren kann. Und schließlich führt die Führungsfläche **18** wieder aufwärts und stetig in den Lagersitz **5** über.

Besonders bedeutsam für die erfindungsgemäße Baugruppe ist, dass der Halteaufsatz **1** eine Blockierfläche **7** und der Balken **3** eine Anschlagfläche **8** aufweist. Die Anschlagfläche **8** kann an der Blockierfläche **7** anschlagen**.** Wie besonders **Fig. A2** bis **Fig. A4** veranschaulichen, ist die Blockierfläche **7** in einem Bereich **9** radial rückwärtig des Lagersitzes **5** angeordnet. Radial bedeutet in diesem Zusammenhang ausgehend von der Schwenkachse **6.** Und rückwärtig bedeutet eine von der für den Gelenkbolzen **4** bestimmten Kontaktoberfläche des Lagersitzes **5** abgewandete Seite. Der Bereich **9** ist als äußeres Ende eines strichpunktiert dargestellten Kreissektors um die Schwenkachse **6** erkennbar. Die in dem Bereich **9** angeordnete Blockierfläche **7** bewirkt, dass in der ersten Schwenkposition **P1** der an dem Balken **3** festgelegte Gelenkbolzen **4** aus dem lateral offenen Lagersitz **5** lateral entweichen kann und in der zweiten Schwenkposition **P2** des Balkens **3** ein laterales Entweichen des am Balken **3** festgelegten Bolzens **4** aus dem lateral offenen Lagersitz **5** mittels einem Anschlagen der Anschlagfläche **8** an die Blockierfläche **7** blockiert ist.

Die Blockierfläche **7** ist um die Schwenkachse **6** konvex gekrümmt. Sie kann wie der Lagersitz **5** zumindest abschnittsweise kreiszylindrisch sein. Wesentlich ist, dass ein Abstand **A1** der Blockierfläche **7** zu der Schwenkachse **6** und ein Abstand **A2** der Anschlagfläche **8** zu der zentralen Längsachse **10** des an dem Balken **3** festgelegten Bolzens **4** mit einer geeigneten Toleranz gleich sind. Die Toleranz soll kleiner als der Radius des an dem Balken **3** festgelegten Gelenkbolzens **4** sein und beträgt hier weniger als 1 mm.

Der Blockierfläche **7** überstreicht in diesem Ausführungsbeispiel einen Winkel von etwa 25 Grad bezüglich der Schwenkachse **6** und ist dergestalt angeordnet, dass der Balken **3** in seiner zweiten Schwenkposition **P2** mit solartypischen Neigungen a zwischen 20 und 45 Grad gegenüber der Waagrechten geneigt sein kann und in diesem Winkelbereich die Anschlagfläche **8** an der Blockierfläche **7** erfindungsgemäß anschlagen kann. Andere Winkelbereiche sind ebenso vorstellbar. Der als Kreissektor zu erkennende Bereich **9** beginnt entsprechend mit einem Winkel β von 45 Grad und endet mit einem Winkel **β'** bei etwa 70 Grad bezüglich der Waagrechten.

Die Anschlagfläche **8** am Balken **3** ist mittels zweier Längsstege **30** ausführt, die in dem Längskanal **15** an den Seitenwänden **33** angeordnet sind. Die Anschlagfläche **8** ist plan und verläuft parallel zu einer Längsrichtung **11** des Balkens **3**. Die Anschlagfläche **8** kann daher mit dem Balken **3** auf einfache Weise mitgefertigt werden, insbesondere mittels Strangpressen. Die Eingriffstiefe **16** des Längskanals **15** ist mittels der Anschlagfläche 8 für den Halteaufsatz 1 begrenzt. In einer nicht näher dargestellten Alternative kann der Halteaufsatz zwei Wangen aufweisen, zwischen denen der Balken angeordnet sein kann. Die Wangen können dann die Blockierfläche tragen. Am Balken kann die Anschlagfläche in diesem Fall außen vorgesehen sein.

Zur Montage wird der Balken **3** zusammen mit dem am Balken **3** festgelegten Gelenkbolzen **4** aus der vom Halteaufsatz **1** separaten Position **P1 in** die erste Schwenkposition **P1** verbracht. Hierbei wird während des Verbringens **23** des Balkens in die erste Schwenkposition **P1** der am Balken **3** festgelegte Gelenkbolzen **4** auf der lateral zugänglichen Führungsfläche **18** lateral zu dem lateral offenen Lagersitz **5** geführt. Hierbei wird der an dem Balken **3** festgelegte Bolzen 4 lateral in den lateral offenen Lagersitz **5** eingesetzt. Danach erfolgt ein Schwenken **24** des Balkens **3** um die Schwenkachse **6** in die zweite Schwenkposition **P2**. Hierbei werden die Blockierfläche **7** und die Anschlagfläche **8** einander eng gegenüber gestellt, sodass ein laterales Entweichen des am Balken **3** festgelegten Gelenkbolzens **4** blockiert ist. Charakteristisch für das Schwenken **24** des Balkens in die zweite Schwenkstellung ist, dass dabei das zu dem an dem Balken **3** festgelegten Gelenkbolzen **4** entfernteres Längsende **20** tiefer gelangt. Es handelt sich folglich um ein Abwärtsschwenken des Balkens **3**.

## Patentansprüche

1. Ständer für PV-Module,
- mit einem Pfosten (**12**), der steht und ein oberes Längsende (**31**) aufweist,
- mit einem Balken (**3**), der über dem Pfosten (**12**) schräg angeordnet ist,
- mit einer Stützstrebe (**23**), mittels der der Balken (**3**) gegen den Pfosten (**12**) abgestützt ist,
- mit einer Justiereinrichtung (**32**), in der ein erster horizontaler Gelenkbolzen (**27**) und ein zweiter horizontaler Gelenkbolzen (**4**) gelagert sind und die eine Justierstrebe (**2**) enthält,
- wobei die Justierstrebe (**2**) in dem Pfosten (**12**) abschnittsweise aufgenommen ist und aus dem oberen Längsende (**31**) des Pfostens (**12**) herausragt,
- und der erste horizontale Gelenkbolzen (**27**) an dem Pfosten (**12**) gelagert ist, und die Justierstrebe (**2**) zur Kompensation einer Neigungsfehlstellung des Pfostens (**12**) um den ersten horizontalen Gelenkbolzen (**27**) schwenkbar und in einer von mehreren möglichen Schwenkstellungen am Pfosten (**12**) drehfest arretiert ist,
- und der Balken (**3**) einen offenen Längskanal (**15**) enthält, der von gegenüberliegenden Seitenwänden (**33**) begrenzt ist, und der zweite horizontalen Gelenkbolzen (**4**) an mindestens einer der gegenüberliegenden Seitenwände (**33**) gelagert ist, wobei eine gedachte Längsachse (**10**) des zweiten horizontaler Gelenkbolzens (**4**) quer durch den offenen Längskanal (**15**) verläuft,
- und die Justiereinrichtung (**32**) in den offenen Längskanal (**15**) eingreift und darin mit dem zweiten horizontalen Gelenkbolzen (**4**) verbunden ist und mittels der gegenüberliegenden Seitenwände (**33**) des Längskanales (**15**) quer zu dem Balken (**3**) festgelegt ist.

2. Ständer nach dem vorhergehenden Anspruch, **dadurch gekennzeichnet, dass** die Justiereinrichtung (**32**) einen Halteaufsatz (**1**) enthält, der an der Justierstrebe (**2**) angeordnet ist und in dem der zweite horizontale Gelenkbolzen (**4**) lagert.

3. Ständer nach dem vorhergehenden Anspruch, **dadurch gekennzeichnet, dass** der Halteaufsatz (**1**) in einer Längsrichtung (**14**) der Justierstrebe (**2**) verstellbar angeordnet ist.

4. Ständer nach einem der vorhergehenden Ansprüche, **dadurch gekennzeichnet, dass** zur drehfesten Arretierung der Justierstrebe (**2**) eine Schraubverbindung (**35a/b**) vorgesehen ist, welche die Justierstrebe (**2**) in einem Bogenloch (**51**) durchdringt und am Pfosten (**12**) in Lagerstücken (**52**) lagert, wobei die Lagerstücke (**52**) in Öffnungen (**53**) im Pfosten (**12**) eingesetzt und dort axial zur der Schraubverbindung (**35a/b**) verschieblich sind und mit der Justierstrebe (**2**) in Reibkraft- und/oder Formschluss stehen.

5. Ständer nach dem vorhergehenden Anspruch, **dadurch gekennzeichnet, dass** die Schraubenverbindung (**35a/b**) in einem Bereich zwischen dem zweiten horizontalen Gelenkbolzen (**4**) und dem oberen Längsende (**31**) des Pfostens (**12**) angeordnet ist.

6. Ständer nach einem der vorhergehenden Ansprüche, **dadurch gekennzeichnet, dass** mindestens ein Abstandshalter vorgesehen sind, der die gegenüberliegenden Seitenwände (**33**) des offenen Längskanales (**15**) festhält und einer Abstandsveränderung der Seitenwände (**33**) entgegenwirkt.

7. Ständer nach einem der vorhergehenden Ansprüche, **dadurch gekennzeichnet, dass** die Stützstrebe (**23**) und der Balken (**3**) mittels einer Gelenkverbindung (**56**) mit einem dritten horizontalen Gelenkbolzen (**57**) verbunden sind.

8. Ständer nach dem vorhergehenden Anspruch, **dadurch gekennzeichnet, dass** der dritte horizontale Gelenkbolzen (**57**) an mindestens einer der gegenüberliegenden Seitenwände (**33**) des Längskanales (**15**) gelagert ist, wobei eine gedachte Längsachse des dritten horizontalen Gelenkbolzen (**57**) quer durch den offenen Längskanal (**15**) verläuft und die Stützstrebe (**23**) oder ein daran angeordneter zweiter Halteaufsatz (**58**) zur Lagerung des dritten horizontalen Gelenkbolzens (**57**) in den offenen Längskanal (**15**) eingreift und mittels der gegenüberliegenden Seitenwände (**33**) des Längskanales (**15**) quer zu dem Balken (**3**) festgelegt ist.

9. Ständer nach dem vorhergehenden Anspruch, **dadurch gekennzeichnet, dass** der zweite Halteaufsatz (**58**) in einer Längsrichtung der Stützstrebe (**23**) verstellbar ist.

10. Ständer nach einem der vorhergehenden Ansprüche, **dadurch gekennzeichnet, dass** der offene Längskanal (**15**) eine Anschlagfläche (**8**) aufweist, an der die Justiereinrichtung (**32**) anschlagen kann.

11. Vormontierte Baugruppe bestehend aus einer Justierstrebe (**2**) und einem Halteaufsatz (**1**) eines Ständers nach einem der Ansprüche 2 oder 3, **dadurch gekennzeichnet, dass** der Halteaufsatz (**1**) an der Justierstrebe (**2**) angeordnet ist und in der Längsrichtung der Justierstrebe (**2**) verstellbar ist.

12. Vormontierte Baugruppe bestehend aus einem Balken (**3**) und einer Stützstrebe (**23**) eines Ständers nach Anspruch 8, **dadurch gekennzeichnet, dass** der Balken (**3**) und die Stützstrebe (**23**) mittels des dritten horizontalen Gelenkbolzens (**57**) miteinander verbunden sind und zum Transport und/oder Lagern der Baugruppe die Stützstrebe (**23**) und der Balken (**3**) zusammengeklappt sind.

13. Vormontierte Baugruppe nach Anspruch 11, **dadurch gekennzeichnet, dass** der zweite horizontale Gelenkbolzen (**4**) an mindestens einer der gegenüberliegenden Seitenwände (**33**) gelagert ist.

14. Verfahren zum Errichten eines Ständers nach einem der Ansprüche 1 bis 10 mit einer Baugruppe nach einem der Ansprüche 12 oder 13, mit den Schritten:
- Errichten des Pfostens (**12**)
- Anordnung der Justiereinrichtung (**32**) am Pfosten (**12**) und Justieren der Justiereinrichtung (**32**)
- Anordnen des Balkens (**3**) an der Justiereinrichtung (**32**) und Wegklappen der Stützstrebe (**23**) vom Balken (**3**)
- Anordnen der Stützstrebe (**23**) am Pfosten (**12**).

## Claims

1. Stand for PV-modules,
- with a post (12), which stands and comprises an upper longitudinal end (31),
- with a beam (3), arranged above the post (12) obliquely,
- with a support strut (23), via which the beam (3) is supported against the post (12),
- with an adjusting device (32), in which a first horizontal hinge pin (27) and a second horizontal hinge pin (4) are supported and which contains an adjusting strut (2),
- wherein the adjusting strut (2) is received in sections in the post (12) and protrudes from the upper longitudinal end (31) of the post (12),
- and the first horizontal hinge pin (27) is supported at the post (12) and the adjusting strut (2) is for compensating a tilt misalignment of the post (12) pivotable around the first horizontal hinge pin (27) and is in one of several possible pivot positions at the post (12) unrotatable locked,
- and the beam (3) contains an open longitudinal channel (15), which is defined by sidewalls (33), and the second horizontal hinge pin (4) is supported at at least one of the opposing side walls (33), wherein an imaginary longitudinal axis (10) of the second horizontal hinge pin (4) extends traverse through the open longitudinal channel (15),
- and the adjusting device (32) engages the open longitudinal channel (15) and is therein connected with the second horizontal hinge pin (4) and fixed transverse to the beam (3) by means of the opposing sidewalls (33) of the longitudinal channel (15).

2. Stand according to the preceding claim, **characterized in that** the adjusting device (32) contains a retaining cap (1), which is arranged at the adjusting strut (2) and supported in the second horizontal hinge pin (4).

3. Stand according to the preceding claim, **characterized in that** the retaining cap (1) is adjustable arranged in the longitudinal direction of the adjusting strut (2).

4. Stand according to one of the preceding claims, **characterized in that** a screw connection (35a/b) is provided for unrotatable locking the adjusting strut (2), wherein the adjusting strut (2) penetrates through an arc hole (51) and is supported at the post (12) in bearing pieces (52), wherein the bearing pieces (52) are inserted in openings (53) of the post (12) and are therein axially slidable to the screw connection (35a/b) therein and are with the adjusting strut (2) in friction force fit and/or form fit.

5. Stand according to the preceding claim, **characterized in that** the screw connection (35a/b) is arranged in an area between the second horizontal hinge pin and the upper longitudinal end (31) of the post (12).

6. Stand according to one of the preceding claims, **characterized in that** at least one spacer is provided, which holds the opposing sidewalls (33) of the open longitudinal channel (15) fixedly, and acts against a distance change of the sidewalls (33).

7. Stand according to one of the preceding claims, **characterized in that** the supporting strut (23) and the beam (3) are connected via a hinge connection (56) with a third horizontal hinge pin (57).

8. Stand according to the preceding claim, **characterized in that** the third horizontal hinge pin (57) is supported at at least one of the opposing sidewalls (33) of the longitudinal channel (15), wherein an imaginary longitudinal axis of the third horizontal hinge pin (57) extends transverse through the open longitudinal channel (15), and the supporting strut (23) or a second retaining cap (58) arranged thereon for supporting the third horizontal hinge pin, which engages the open longitudinal channel (15), and by means of which the opposing sidewalls (33) of the longitudinal channel (15) are fixed transverse to the beam (3).

9. Stand according to the preceding claim, **characterized in that** the second retaining cap (58) is adjustable in a longitudinal direction of the supporting strut (23).

10. Stand according to one of the preceding claims, **characterized in that** the open longitudinal channel (15) comprises a stop face (8), at which the adjusting device (32) may strike.

11. Pre-assembled assembly group, consisting of an adjusting strut (2) and a retaining cap (1) of a stand according to one of the claims 2 or 3, **characterized in that** the retaining cap (1) is arranged at the adjusting strut (2) and is adjustable in a longitudinal direction of the adjusting strut (2).

12. Pre-assembled assembly group, consisting of a beam (3) and a supporting strut (23) of a stand according to claim 8, **characterized in that** the beam (3) and the supporting strut (23) are connected to each other by means of the third horizontal hinge pin (57) and the supporting strut (23) and the beam (3) are folded for transport and/or storing of the assembly group.

13. Pre-assembled assembly group according to claim 11, **characterized in that** the second horizontal hinge pin (4) is supported at at least one of the opposing sidewalls (33).

14. Method for raising a post according to one of the claims 1 to 10 with an assembly group according to one of the claims 12 or 13, comprising the steps of:
- raising the post (12)
- arranging the adjusting device (32) at post (12) and adjusting the adjusting device (32)
- arranging the beam (3) at the adjusting device (32) and folding away the supporting strut (23) from the beam (3)
- arranging the supporting strut (23) at the post (12).

## Revendications

1. Support pour modules photovoltaïques (PV), comprenant
- un montant (12) qui est dressé et présente une extrémité longitudinale supérieure (31),
- une poutre (3) qui est montée inclinée au-dessus du montant (12),
- un étrésillon (23) au moyen duquel la poutre (3) est maintenue en appui contre le montant (12),
- un dispositif d'ajustage (32) dans lequel sont montées une première goupille d'articulation horizontale (27) et une deuxième goupille d'articulation horizontale (4), et lequel dispositif comporte un étançon d'ajustage (2),
- l'étançon d'ajustage (2) étant logé partiellement dans le montant (12) et faisant saillie de l'extrémité longitudinale supérieure (31) dudit montant (12),
- et la première goupille d'articulation horizontale (27) étant montée sur le montant (12), et l'étançon d'ajustage (2) pouvant pivoter autour de la première goupille d'articulation horizontale (27) pour compenser une position inclinée incorrecte du montant (12) et être bloqué fixe en rotation sur le montant (12) dans une des plusieurs positions de pivotement possibles,
- et la poutre (3) comportant un conduit longitudinal ouvert (15) qui est délimité par des parois latérales opposées (33), et la deuxième goupille d'articulation horizontale (4) étant montée sur au moins une des parois latérales opposées (33), un axe longitudinal imaginaire (10) de la deuxième goupille d'articulation horizontale (4) s'étendant transversalement à travers le conduit longitudinal ouvert (15),
- et le dispositif d'ajustage (32) étant engagé dans le canal longitudinal ouvert (15), où il est relié à la deuxième goupille d'articulation horizontale (4), et étant fixé transversalement à la poutre (3) au moyen des parois latérales opposées (33) du conduit longitudinal (15).

2. Support selon la revendication précédente, **caractérisé en ce que** le dispositif d'ajustage (32) comporte un embout de maintien (1) qui est monté sur l'étançon d'ajustage (2) et dans lequel est logé la deuxième goupille d'articulation horizontale (4).

3. Support selon la revendication précédente, **caractérisé en ce que** l'embout de maintien (1) est monté réglable dans une direction longitudinale (14) de l'étançon d'ajustage (2).

4. Support selon l'une des revendications précédentes, **caractérisé en ce que** le blocage fixe en rotation de l'étançon d'ajustage (2) est assuré par un assemblage par vis (35a/b) lequel traverse l'étançon d'ajustage (2) par un trou oblong (51) et est monté sur le montant (12) dans des éléments de palier (52), ces éléments de palier (52) étant placés dans des ouvertures (53) ménagées dans le montant (12) et pouvant être déplacés axialement par rapport à l'assemblage par vis (35a/b) et étant reliés par complémentarité de forme et/ou par force de frottement à l'étançon d'ajustage (2).

5. Support selon la revendication précédente, **caractérisé en ce que** l'assemblage par vis (35a/b) est disposé dans zone située entre la deuxième goupille d'articulation horizontale (4) et l'extrémité longitudinale supérieure (31) du montant (12).

6. Support selon l'une des revendications précédentes, **caractérisé en ce qu'**il est prévu au moins un écarteur qui maintient écartées les parois latérales opposées (33) du conduit longitudinal ouvert (15) et s'oppose à une modification de l'écartement des parois latérales (33).

7. Support selon l'une des revendications précédentes, **caractérisé en ce que** l'étrésillon (23) et la poutre (3) sont reliés à une troisième goupille d'articulation horizontale (57) au moyen d'une liaison articulée (56).

8. Support selon la revendication précédente, **caractérisé en ce que** la troisième goupille d'articulation horizontale (57) est montée sur au moins une des parois latérales opposées (33) du conduit longitudinal (15), un axe longitudinal imaginaire (10) de la troisième goupille d'articulation horizontale (57) s'étendant transversalement à travers le conduit longitudinal ouvert (15), et l'étrésillon (23) ou un deuxième embout de maintien (58) monté sur ce dernier pour le logement de la troisième goupille d'articulation horizontale (57) étant engagé dans le canal longitudinal ouvert (15) et fixé transversalement à la poutre (3) au moyen des parois latérales opposées (33) du conduit longitudinal (15).

9. Support selon la revendication précédente, **caractérisé en ce que** le deuxième embout de maintien (58) peut être déplacé dans une direction longitudinale de l'étrésillon (23).

10. Support selon l'une des revendications précédentes, **caractérisé en ce que** le conduit longitudinal ouvert (15) présente une surface de butée (8) contre laquelle le dispositif d'ajustage (32) peut venir en butée.

11. Sous-ensemble pré-assemblé, constitué d'un étançon d'ajustage (2) et d'un embout de maintien (1), pour un support selon l'une des revendications 2 ou 3, **caractérisé en ce que** l'embout de maintien (1) est monté sur l'étançon d'ajustage (2) sur lequel il est disposé réglable dans la direction longitudinale de l'étançon d'ajustage (2).

12. Sous-ensemble pré-assemblé, constitué d'une poutre (3) et d'un étrésillon (23), pour un support selon la revendication 8, **caractérisé en ce que** la poutre (3) et l'étrésillon (23) sont reliés l'un à l'autre au moyen de la troisième goupille d'articulation horizontale (57) et **en ce que** l'étrésillon (23) et la poutre (3) peuvent être repliés en vue du transport et/ou du stockage du sous-ensemble.

13. Sous-ensemble pré-assemblé selon la revendication 11, **caractérisé en ce que** la deuxième goupille d'articulation horizontale (4) est montée sur au moins une des parois latérales opposées (33).

14. Procédé pour mettre en place un support selon l'une des revendications 1 à 10 constitué d'un sous-ensemble selon l'une des revendications 12 ou 13, comportant les étapes suivantes :
- la mise en place du montant (12)
- le montage du dispositif d'ajustage (32) sur le montant (12) et l'ajustage du dispositif d'ajustage (32)
- le montage de la poutre (3) sur le dispositif d'ajustage (32) et l'ouverture de l'étrésillon (23) rabattu contre la poutre (3)
- le positionnement de l'étrésillon (23) sur le montant (12).
